(19) Europäisches Patentamt
European Patent Office
Office européen des brevets

(11) EP 3 676 197 B1

(12) EUROPEAN PATENT SPECIFICATION

(45) Date of publication and mention of the grant of the patent:
**18.10.2023 Bulletin 2023/42**

(21) Application number: **18769570.5**

(22) Date of filing: **31.08.2018**

(51) International Patent Classification (IPC):
***B65D 25/14*** *(2006.01)* ***C08G 63/12*** *(2006.01)*
***C08G 63/692*** *(2006.01)* ***C09D 167/00*** *(2006.01)*
***B65D 17/28*** *(2006.01)*

(52) Cooperative Patent Classification (CPC):
(C-Sets available)
**B65D 17/4012; B65D 25/14; C09D 167/00;**
C08G 63/12; C08G 63/6924 (Cont.)

(86) International application number:
**PCT/US2018/049120**

(87) International publication number:
**WO 2019/046737 (07.03.2019 Gazette 2019/10)**

(54) **USE OF A COATING COMPOSITION AND METHOD OF COATING A CAN**

VERWENDUNG EINER BESCHICHTUNGSZUSAMMENSETZUNG

UTILISATION D'UNE COMPOSITION DE REVÊTEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.09.2017 EP 17189078**

(43) Date of publication of application:
**08.07.2020 Bulletin 2020/28**

(73) Proprietor: **PPG Industries Ohio, Inc.**
**Cleveland, OH 44111 (US)**

(72) Inventors:
- **SENEKER, Carl**
  **Milford, OH 45150 (US)**
- **LI, Qin**
  **Mason, OH 45040 (US)**
- **ZHANG, Wenchao**
  **Mason, OH 45040 (US)**
- **MILLERO, JR., Edward R.**
  **Gibsonia, PA 15044 (US)**
- **HU, Fengshuo**
  **Mason, OH 45040 (US)**
- **MOLLEO, Max**
  **Loveland, OH 45140 (US)**

(74) Representative: **Appleyard Lees IP LLP**
**15 Clare Road**
**Halifax HX1 2HY (GB)**

(56) References cited:
**EP-A1- 0 312 311**
**WO-A1-2004/013240**
**JP-A- H08 325 513**
**US-A- 4 890 759**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09D 167/00, C08L 67/00**

## Description

### FIELD OF THE INVENTION

The present invention relates to the use of a coating composition and a method of coating a can. In particular, the present invention relates to the use of a coating composition comprising a polyester material for the reduction or prevention of insufficient venting of a beverage can and to a method of coating a beverage can for carbonated drinks to reduce or prevent insufficient venting of the beverage can.

### BACKGROUND OF THE INVENTION

Beverage cans are known in the art and typically comprise a can body and at least one can end. For example, the beverage can may be in the form of a two-piece can comprising a can body having an integrated bottom portion and a can end attached thereto or the beverage can may be in the form of a three-piece can comprising a can body, such as a substantially cylindrical can body, and top and bottom can ends attached thereto. Can ends may have a score line thereon defining a portion of the can end to be opened such that, upon opening, the can contents can be removed, for example, by pouring. The score line facilitates shearing around the periphery of the portion of the can end to be opened and, therefore, facilitates removal of the portion of the can end to be opened. Such metal cans provided with a score line are known for example from EP03312311.

In the case of beverage cans containing carbonated beverages, such as, for example, beer or soda, sufficient carbonated gas should be allowed to escape from the beverage can substantially immediately upon opening of the beverage can in order to prevent the build up of said gas within the beverage can. Upon opening a carbonated beverage can, the mechanical seal of the portion of the can to be opened is broken, i.e. the metal along the score line is ruptured. However, the coating seal, i.e. the coating composition covering the score line, should also be simultaneously broken otherwise the coating composition may continue to cover the gap created upon breaking the mechanical seal (rupturing the score line) thereby preventing carbonated gas escaping from the beverage can. The release of carbonated gas from the beverage can upon opening thereof is known as 'venting'. If insufficient venting occurs, i.e. if an insufficient amount of carbonated gas is released substantially immediately upon opening of the beverage can because the coating seal is not broken, pressure can build up within the beverage can leading to, for example, the coating seal eventually rupturing under the pressure and the beverage can exploding. Therefore, should exhibit sufficient venting upon rupture of the score line.

Therefore, there is a desire to provide a coating composition for use in the opening of a beverage can that can reduce or prevent insufficient venting of the beverage by breaking cleanly, when the score line is ruptured.

### SUMMARY OF THE INVENTION

The present invention is directed to the use of a coating composition in the reduction or prevention of insufficient venting of a beverage can, the beverage can comprising a can body and a can end having a score line on said can end, wherein the coating composition comprises a polyester material, wherein the coating composition is applied to at least the internal surface of the can end over at least a portion of the score line, and wherein a cured film formed from the coating composition has a glass transition temperature (Tg) of at least 50° C.

The present invention is directed to a method of coating a can comprising a can body and a can end having a score line on said can end, wherein the method comprises applying a coating composition to at least a portion of an internal surface of the can end over at least a portion of the score line, the coating composition comprising a polyester material;

> and curing the coating composition to form a cured film, wherein the cured film has a glass transition temperature (Tg) of at least 50°C,

> wherein the can, when filled with a carbonated beverage and sealed, exhibits sufficient venting upon rupture of the score line.

### DETAILED DESCRIPTION

The present invention is directed to the use of a coating composition in the reduction or prevention of insufficient venting of a beverage can, the beverage can comprising a can body and a can end having a score line on said can end, wherein the coating composition comprises a polyester material, wherein the coating composition is applied to at least the internal surface of the can end over at least a portion of the score line, and wherein a cured film formed from the

coating composition has a glass transition temperature (Tg) of at least 50° C.

The present invention is directed to a method of coating a can comprising a can body and a can end having a score line on said can end, wherein the method comprises applying a coating composition to at least a portion of an internal surface of the can end over at least a portion of the score line, the coating composition comprising a polyester material;

and curing the coating composition to form a cured film, wherein the cured film has a glass transition temperature (Tg) of at least 50°C,

wherein the can, when filled with a carbonated beverage and sealed, exhibits sufficient venting upon rupture of the score line.

By "sufficient venting" and like terms as used herein is meant, unless specified otherwise, that a sufficient amount of gas, such as carbonated gas, is released substantially immediately upon rupture of the score line to ensure that pressure does not build up within the beverage can. Suitably, sufficient gas, such as carbonated gas, is released substantially immediately upon rupturing the score line such that the pressure on the inside of the beverage can is substantially equal to the pressure on the outside of the beverage can. The degree of venting may be measured according to the eversion test as described in the examples section. Eversion occurs where the score line is ruptured, but the internal pressure of the can due to carbonation is not immediately released, causing the opening portion of the can to break open and project out of the can rather than entering the can (or inversion) as is typical when a can is opened. "Insufficient venting" will be understood as the opposite of "sufficient venting" described above.

The can ends of the present invention have a score line thereon. "Score line" means a line which is partially cut into the can end, such that the line does not extend all the way through the can end, and which defines a portion of the can end to be opened (an opening portion). Suitably, the score line is of a sufficient depth and width such that it facilitates rupturing around the periphery of the opening portion upon the application of a pushing and/or pulling force to the portion of the can end to be opened. Such score lines will be well known to a person skilled in the art.

For the avoidance of doubt, by the term "rupturing the score line" is meant that the score line of the can end is compromised such that the mechanical seal shears. The mechanical seal is that formed from the metal substrate from which the beverage can end is formed, for example, that formed by the can end having a score line thereon. In contrast, the coating seal is that formed by the cured film derived from the coating composition(s) applied to the internal surface of the can end over at least a portion of the score line. The score line may be ruptured by the application of a pushing and/or pulling force to the portion of the can end to be opened.

The polyester material includes copolymers of a polyacid and a polyol, and also includes polyesters that have been modified, such as polyesters that are modified by grafting a further polymer onto the polyester. Examples of modified polyesters include an acrylic modified polyester resin.

The polyester material may comprise any suitable polyester material. The polyester material may comprise the reaction product of a reaction mixture comprising a polyacid and a polyol. The polyester material may be obtainable by polymerizing a polyacid and a polyol.

"Polyacid" and like terms as used herein, refers to a compound having two or more carboxylic acid groups, such as two, three or four acid groups, and includes an ester of the polyacid (wherein one or more of the acid groups is esterified) or an anhydride. The polyacid is suitably an organic polyacid.

The carboxylic acid groups of the polyacid of the polyester material may be connected by a bridging group selected from: an alkylene group; an alkenylene group; an alkynylene group; or an arylene group.

The polyester material may be formed from any suitable polyacid. Suitable examples of polyacids include, but are not limited to the following: maleic acid; fumaric acid; itaconic acid; adipic acid; azelaic acid; succinic acid; sebacic acid; glutaric acid; decanoic diacid; dodecanoic diacid; phthalic acid; isophthalic acid; 5-tert-butylisophthalic acid; tetrachlorophthalic acid; tetrahydrophthalic acid; trimellitic acid; naphthalene dicarboxylic acid; naphthalene tetracarboxylic acid; terephthalic acid; hexahydrophthalic acid; methylhexahydrophthalic acid; dimethyl terephthalate; cyclohexane dicarboxylic acid; chlorendic anhydride; 1,3-cyclohexane dicarboxylic acid; 1,4-cyclohexane dicarboxylic acid; tricyclodecane polycarboxylic acid; endomethylene tetrahydrophthalic acid; endoethylene hexahydrophthalic acid; cyclohexanetetra carboxylic acid; cyclobutane tetracarboxylic; a monomer having an aliphatic group containing at least 15 carbon atoms; esters and anhydrides of all the aforementioned acids and combinations thereof.

Suitably, the carboxylic acid groups of the polyacid may be connected by an arylene bridging group. Thus, suitably, the polyacid may comprise an aromatic polyacid.

The polyacid component may comprise terephthalic acid (TPA), isophthalic acid (IPA), dimethyl terephthalate, dimethyl isophthalic acid, 1,4 cyclohexane dicarboxylic acid, hexahydrophthalic anhydride, 2,6- naphthalene dicarboxylic acid, adipic acid, phthalic anhydride, maleic anhydride, and/or fumaric anhydride.

The polyester material may be formed from a diacid. The polyester material may be formed from any suitable

diacid. Suitable examples of diacids include, but are not limited to the following: phthalic acid; isophthalic acid; terephthalic acid; 1,4 cyclohexane dicarboxylic acid; succinic acid; adipic acid; azelaic acid; sebacic acid; fumaric acid; 2,6-naphthalene dicarboxylic acid; orthophthalic acid; phthalic anhydride; tetrahydrophthalic anhydride; maleic anhydride; succinic anhydride; itaconic anhydride; di-ester materials, such as dimethyl ester derivatives for example dimethyl isophthalate, dimethyl terephthalate, dimethyl 1,4-cyclohexane dicarboxylate, dimethyl 2,6-naphthalene di carboxylate, dimethyl fumarate, dimethyl orthophthalate, dimethylsuccinate, dimethyl glutarate, dimethyl adipate; a monomer having an aliphatic group containing at least 15 carbon atoms; esters and anhydrides of all the aforementioned acids; and mixtures thereof.

"Polyol" and like terms, as used herein, refers to a compound having two or more hydroxyl groups, such as two, three or four hydroxyl groups. The hydroxyl groups of the polyol may be connected by a bridging group selected from: an alkylene group; an alkenylene group; an alkynylene group; or an arylene group. Suitably the polyol is an organic polyol.

The polyester material may be formed from any suitable polyol. Suitable examples of polyols include, but are not limited to the following: alkylene glycols, such as ethylene glycol; propylene glycol; diethylene glycol; dipropylene glycol; triethylene glycol; tripropylene glycol; hexylene glycol; polyethylene glycol; polypropylene glycol and neopentyl glycol; hydrogenated bisphenol A; cyclohexanediol; propanediols including 1,2-propanediol; 1,3-propanediol; butyl ethyl propanediol; 2-methyl-1,3-propanediol; and 2-ethyl-2-butyl-1,3-propanediol; butanediols including 1,4-butanediol; 1,3-butanediol; 2,2,4,4-tetraalkyl-1,3-cyclobutanediol such as 2,2,4,4-tetramethyl-1,3-cyclobutanediol; and 2-ethyl-1,4-butanediol; pentanediols including trimethyl pentanediol and 2-methylpentanediol; cyclohexanedimethanol; hexanediols including 1,6-hexanediol; caprolactonediol (for example, the reaction product of epsilon-capro lactone and ethylene glycol); hydroxyalkylated bisphenols; polyether glycols, for example, poly(oxytetramethylene) glycol; trimethylol propane; pentaerythritol; di-pentaerythritol; trimethylol ethane; trimethylol butane; dimethylol cyclohexane; bio-derived polyols such as glycerol, sorbitol; and/or a monomer having an aliphatic group containing at least 15 carbon atoms and the like or combinations thereof.

Suitably, the polyol may comprise cyclohexanedimethanol, 2-methyl-1,3-propanediol, ethylene glycol and combinations thereof.

The polyester material may be formed from a diol. The polyester material may be formed from any suitable diol. Suitable examples of diols include, but are not limited to the following: ethylene glycol; 1,2-propane diol; 1,3-propane diol; 1,2-butandiol; 1,3-butandiol; 1,4-butandiol; but-2-ene 1,4-diol; 2,3-butane diol; 2-methyl 1,3-propane diol; 2,2'-dimethyl 1,3-propanediol (neopentyl glycol); 1,5 pentane diol; 3-methyl 1,5-pentanediol; 2,4-diethyl 1,5-pentane diol; 1,6-hexane diol; 2-ethyl 1,3-hexane diol; diethylene glycol; triethylene glycol; dipropylene glycol; tripropylene glycol; 2,2,4-trimethyl pentane 1 ,3-diol; 1,4 cyclohexane dimethanol; tricyclodecane dimethanol; 2,2,4,4-tetramethyl cyclobutane 1,3-diol; isosorbide; 1,4-cyclohexane diol; 1,1'-isopropylidene-bis (4-cyclohexanol); and mixtures thereof.

The polyol component may comprise a polyol having at least three hydroxyl groups, such as trimethylol propane; pentaerythritol; di-pentaerythritol; trimethylol ethane; trimethylol butane; and/or bio-derived polyols such as glycerol and/or sorbitol. Suitably, the polyol component having at least three hydroxyl groups comprises a triol and/or tetrol, such as trimethylol propane; pentaerythritol; trimethylol ethane; trimethylol butane and/or glycerol. Suitably, the polyol component having at least three hydroxyl groups may comprise a triol, such as trimethylol propane; trimethylol ethane; and/or trimethylol butane, for example trimethylol propane.

The polyol having at least three hydroxyl groups may be present as a proportion of the dry weight of the polyol component in an amount of from 0.1 to 1 0wt%, such as from 0.5 to 8wt% or from 0.7 to 6wt%, for example from 0.8 to 5wt% or from 0.9 to 4wt%, suitably from 1 to 3wt% or from 1 to 2wt%.

The polyol component may comprise: 2-methyl propanediol (2-MPD), neopentyl glycol (NPG), 1,4-cyclohexane dimethanol (CHDM), butyl ethyl propane diol (BEPD), trimethylolppropane (TMP) and/or 1,6 hexanediol.

The polyacid component and/or the polyol component of the polyester material or the polyester material of the acrylic polyester resin may comprise a Tg enhancing monomer comprising:

(i) an optionally substituted naphthalene group-containing polyacid or polyol, or hydrogenated derivative thereof;
(ii) a polyacid or polyol comprising two optionally substituted 5 or 6 membered cyclic groups, wherein the cyclic groups do not share an atom, and wherein the cyclic groups are directly bonded or are separated by one carbon atom;
(iii) an optionally substituted furan group-containing polyacid or polyol;
(iv) an optionally substituted fused bicyclic group-containing polyacid or polyol, wherein each ring is a five membered ring and in which one or both rings may comprise a heteroatom in the ring;
(v) an optionally substituted bridged tricyclodecane group-containing polyacid or polyol;
(vi) an optionally substituted bridged norbornene-group containing polyacid or polyol, or hydrogenated derivative thereof;
(vii) an optionally substituted 5 or 6 membered cycloalkyl or aromatic group-containing polyacid or polyol;
(viii) a branched alkyl group-containing polyacid or polyol monomer wherein the monomer comprises at least one quaternary carbon atom and is formed of from 5 to 10 carbon atoms, and wherein the carbon atoms bonded to the

acid or hydroxyl groups are primary carbon atoms;
(ix) an optionally substituted tetraoxaspiro[5.5]undecane-group containing polyacid or polyol; and/or
(x) a diol according to formula (I)

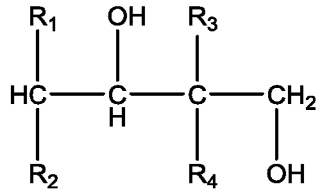

(I)

wherein $R_1$ and $R_2$ each independently represent a hydrogen radical, a lower alkyl radical or an aryl radical having 6 to 12 carbon atoms, wherein at least one of $R_1$ or $R_2$ is a lower alkyl radical or an aryl radical having 6 to 12 carbon atoms; and $R_3$ and $R_4$ each independently represent a lower alkyl radical or an aryl radical having 6 to 12 carbon atoms.

Tg enhancing monomer means a monomer that raises the Tg of a polyester resin and/or a cured film formed from a coating composition compared to a polyester resin or cured film composition that is the same except for not containing the Tg enhancing monomer.

The Tg enhancing monomer may comprise monomer (i). The hydrogenated derivative of Tg enhancing monomer (i) may be fully or partially hydrogenated. As such, the hydrogenated derivative of (i) may be unsaturated. Suitably, the hydrogenated derivative of (i) is saturated. Tg enhancing monomer (i) may comprise 2,6-naphthalenedicarboxylic acid, 1,8 dihydroxy naphthalene, and/or hydrogenated 1,8 dihydroxy naphthalene, and/or esters and/or anhydrides of all the aforementioned acids.

The Tg enhancing monomer may comprise monomer (ii). The cyclic groups of Tg enhancing monomer (ii) may be aromatic or alicyclic. Monomer (ii) may comprise two optionally substituted 6 membered cyclic groups. Suitably, monomer (ii) may comprise two optionally substituted 6 membered aromatic cyclic groups that are directly bonded. Suitably, monomer (ii) may comprise two optionally substituted 6 membered alicyclic cyclic groups that are separated by one carbon atom, suitably, the alicyclic groups of monomer (ii) are cycloalkyl. "Directly bonded" when used herein means that a ring atom in one of the two cyclic groups is covalently bonded with a ring atom in the other cyclic group. Tg enhancing monomer (ii) may comprise hydrogenated bisphenol A, and/or 2-(2-carboxyphenyl)-benzoic acid, and/or esters and/or anhydrides of all the aforementioned acids.

The Tg enhancing monomer may comprise monomer (iii). Tg enhancing monomer (iii) may comprise 2,5 furandicarboxylic acid, and esters and anhydrides of all the aforementioned acids.

The Tg enhancing monomer may comprise monomer (iv). Monomer (iv) may comprise a heteroatom in a ring, suitably one heteroatom in each ring, and suitably the heteroatoms are oxygen or nitrogen atoms, such as oxygen atoms. Tg enhancing monomer (iv) may comprise isosorbide, and/or isomannide.

The Tg enhancing monomer may comprise monomer (v). The optionally substituted bridged tricyclodecane group of monomer (v) may be saturated or unsaturated, suitably saturated. The optionally substituted bridged tricyclodecane group may be tricyclo[5.2.1.0(2,6)]decane. Tg enhancing monomer (v) may comprise tricyclodecane dimethanol, tricyclodecane diol, and/or tricyclocdecane polycarboxylic acid, and/or esters and/or anhydrides of all the aforementioned acids.

The Tg enhancing monomer may comprise monomer (vi). The optionally substituted hydrogenated derivative of the optionally substituted bridged norbornene-group of monomer (vi) may comprise optionally substituted norbornane. Tg enhancing monomer (vi) may comprise nadic methyl acid, nadic acid, and/or chlorendic anhydride, and/or esters and/or anhydrides/acids of all the aforementioned acids/anhydrides.

The Tg enhancing monomer may comprise monomer (vii). The optionally substituted 5 or 6 membered cycloalkyl group of monomer (vii) may be saturated or partly unsaturated. Tg enhancing monomer (vii) may comprise cyclohexane dimethanol, cyclohexane diol, 1,3-cyclohexane dicarboxylic acid, 1,4-cyclohexane dicarboxylic acid, dimethyl-1,4-cyclochexane dicarboxylate, isophthalic acid, phthalic acid; isophthalic acid; 5-tert-butylisophthalic acid; tetrachlorophthalic acid; tetrahydrophthalic acid; hexahydrophthalic acid; methylhexahydrophthalic acid; endomethylene tetrahydrophthalic acid; endoethylene hexahydrophthalic acid; orthophthalic acid; phthalic anhydride; tetrahydrophthalic anhydride; dimethyl orthophthalate and/or terephthalic acid and/or esters and/or anhydrides of all the aforementioned acids.

The Tg enhancing monomer may comprise monomer (viii). The branched alkyl group-containing monomer (viii) may be formed of from 5 to 8 carbon atoms, such as from 5 to 7 carbon atoms, 5 to 6 carbon atoms or 5 carbon atoms. Tg enhancing monomer (viii) may comprise neopentyl glycol.

The Tg enhancing monomer may comprise monomer (ix). Monomer (ix) may be 3,9-Bis(1,1-dialkyl-2-hydroxyethyl)-2,4,8,10-tetraoxaspiro[5.5]undecane, wherein alkyl is methyl, ethyl or propyl. Suitably monomer (ix) comprises

3,9-Bis(1,1-dimethyl-2-hydroxyethyl)-2,4,8,10-tetraoxaspiro[5.5]undecane.

The Tg enhancing monomer may comprise monomer (x). The $R_1$ and $R_2$ groups of the diol according to formula (I) may each independently represent hydrogen, a lower alkyl or an aryl radical having 6 to 12 carbon atoms, wherein at least one of $R_1$ or $R_2$ is a lower alkyl radical. The $R_3$ and $R_4$ groups of the diol according to formula (I) may each independently represent a lower alkyl radical or an aryl radical having 6 to 12 carbon atoms, wherein at least one of $R_3$ or $R_4$ is a lower alkyl radical.

The aryl radical of the diol according to formula (I) may have 6 to 10 carbon atoms, such as 6 to 8 carbon atoms or 6 carbon atoms. The $R_1$ and $R_2$ groups of the diol according to formula (I) may each independently represent hydrogen, or a lower alkyl radical, wherein at least one of $R_1$ or $R_2$ is a lower alkyl radical. The $R_3$ and $R_4$ groups of the diol according to formula (I) may each independently represent a lower alkyl radical

The $R_1$, $R_2$, $R_3$ and $R_5$ groups of the diol according to formula (I) may each independently represent a lower alkyl radical. The lower alkyl radical may be an alkyl radical having 1 to 8 carbon atoms; or 1 to 6 carbon atoms, or 1 to 5 carbon atoms, or 1 to 4 carbon atoms, or 1 to 3 carbon atoms, or 1 to 2 carbon atoms, or 1 carbon atom. The alkyl radicals may be linear, branched, or a combination of linear and branched alkyl radicals. The diol according to Formula (I) may comprise 2,2,4-trimethyl-1,3-pentanediol (TMPD).

The Tg enhancing monomer may comprise 2,6-naphthalenedicarboxylic acid, 1,8 dihydroxy naphthalene, hydrogenated 1,8 dihydroxy naphthalene, hydrogenated bisphenol A, 2-(2-carboxyphenyl)-benzoic acid, 2,5 furandicarboxylic acid, isosorbide, isomannide, tricyclodecane dimethanol, tricyclodecane diol, tricyclocdecane polycarboxylic acid, nadic methyl acid, nadic acid, chlorendic anhydride, cyclohexane dimethanol, cyclohexane diol, 1,3-cyclohexane dicarboxylic acid, 1,4-cyclohexane dicarboxylic acid, dimethyl-1,4-cyclochexane dicarboxylate, neopentyl glycol, 3,9-Bis(1,1-dimethyl-2-hydroxyethyl)-2,4,8,10-tetraoxaspiro[5.5]undecane, isophthalic acid, phthalic acid; isophthalic acid; 5-tert-butylisophthalic acid; tetrachlorophthalic acid; tetrahydrophthalic acid; hexahydrophthalic acid; methylhexahydrophthalic acid; endomethylene tetrahydrophthalic acid; endoethylene hexahydrophthalic acid; orthophthalic acid; phthalic anhydride; 2,2,4-trimethyl-1,3-pentanediol, tetrahydrophthalic anhydride; dimethyl orthophthalate and/or terephalic acid and/or esters and/or anhydrides/acids of all the aforementioned acids/anhydrides.

The amount of Tg enhancing monomer in the polyol and polyacid components may be the amount required to impart the desired Tg in the polyester material and/or a cured film formed from a coating composition comprising the polyester material. For example, the amount of Tg enhancing monomer (i) to (x) in the polyol and/or polyacid components may be the amount required to achieve a Tg in the polyester material and/or a cured film formed from a coating composition comprising the polyester material of at least 50° C, or a Tg of at least 55° C, or at least 60° C, such as at least 65° C or at least 70° C.

The Tg enhancing monomer (i) to (x), if used, may be present in an amount of 10mol% based on the total mol% of the combined polyacid and polyol components. Suitably the Tg enhancing monomer, if used may comprise at least 20mole% based on the total mol% of the combined polyacid and polyol components , such as at least 30mole%, at least 40mole% or at least 50mole%.

The cured film formed from the coating composition has a glass transition temperature (Tg) of at least 50°C.

The cured film formed from the coating composition may have a glass transition temperature (Tg) of at least 55°C.

The cured film formed from the coating composition may have a glass transition temperature (Tg) of at least 60°C.

The cured film formed from the coating composition may have a glass transition temperature (Tg) of at least 65°C, such as at least 70°C.

The cured film formed from the coating composition may have a glass transition temperature (Tg) of up to 200°C.

The cured film formed from the coating composition may have a glass transition temperature (Tg) of up to 150°C.

The cured film formed from the coating composition may have a glass transition temperature (Tg) of up to 120°C.

The cured film formed from the coating composition may have a glass transition temperature (Tg) of up to 110°C.

The cured film formed from the coating composition may have a glass transition temperature (Tg) of up to 105°C.

The cured film formed from the coating composition may have a glass transition temperature (Tg) from 50 to 200°C, suitably from 50 to 150°C, such as from 50 to 120°C, such as from 50 to 110°C, or even from 50 to 105°C. The cured film formed from the coating composition may have a glass transition temperature (Tg) from 60 to 200°C, suitably from 60 to 150°C, such as from 60 to 120°C, such as from 60 to 110°C, or even from 60 to 105°C. The cured film formed from the coating composition may have a glass transition temperature (Tg) from 70 to 200°C, suitably from 70 to 150°C, such as from 70 to 120°C, such as from 70 to 110°C, or even from 70 to 105°C. The cured film formed from the coating composition may have a glass transition temperature (Tg) from 75 to 200°C, suitably from 75 to 150°C, such as from 75 to 120°C, such as from 75 to 110°C, or even from 75 to 105°C.

Suitably, the cured film formed from the coating composition may have a glass transition temperature (Tg) from 65 to 110°C.

The polyester material may have a Tg of at least 50°C, such as at least 55°C, or at least 60°C. The Tg of the polyester material may have a Tg of at least 65°C, or at least 70°C.The polyester material may have a Tg of up to 120°C, such as up to 115°C, such as up to 110°C, such as up to 105°C. The polyester material may have a Tg of up to 100°C.

The polyester material may have a Tg of from 50°C to 120°C, such as from 60 to 105°C.

The Tg mentioned herein was measured as defined in the Test Method section, below.

At least one of the polyacid component and/or the polyol component of the polyester material may comprise a monomer having an aliphatic group containing at least 15 carbon atoms.

Further details of such a monomer having an aliphatic group containing at least 15 carbon atoms are disclosed in published PCT patent application WO 2018/111854, specifically, paragraphs [016] to [030] inclusive.

Suitably, the polyacid component and/or the polyol component may comprise a sulfonated monomer. The sulfonated monomer may comprise a sulfonated diacid, such as a sulfonated aromatic diacid. The sulfonated monomer may comprise a salt thereof, such as an inorganic salt, for example a metal or ammonium salt. Examples of metal salts would include, for example sodium salts, lithium salts, potassium salts, magnesium salts, calcium salts, iron salts etc.

Suitably, the polyacid component may comprise a sulfonated monomer. Alternatively, the polyacid component may be substantially free of sulfonated monomer.

Suitably, the sulfonated monomer may comprise a metal salt of 5-(sulfo)-isopthalic acid, such as the sodium salt thereof, referred to as 5-(sodiosulfo)-isophthalic acid, also referred to herein as 5-SSIPA.

Suitably, the sulfonated monomer may comprise: 5-(sodiosulfo)-isophthalic acid, dimethyl 5-(sodiosulfo)isophalate, 5-(lithiosulfo)isophthalic acid, and/or bis(2-hydroxyethyl)-5-(sodiosulfo)isophthalate.

Where the sulfonated monomer is a polyacid, the sulfonated monomer may be present as a proportion of the dry weight of the polyacid component in an amount of from 5 to 20wt%, such as 7 to 15wt%.

Where the sulfonated monomer is a polyol, the sulfonated monomer may be present as a proportion of the dry weight of the polyol component in an amount of from 5 to 20wt%, such as 7 to 15wt%.

The polyester material may optionally be formed from an additional monomer.

The additional monomer may comprise a monoacid. "Monoacid", and like terms as used herein, refers to compounds having one carboxylic acid group and includes an ester of the monoacid (where the acid group is esterified) or an anhydride. The monoacid is suitably an organic monoacid.

Suitable examples of monoacids include, but are not limited to the following: benzoic acid; cyclohexane carboxylic acid; tricyclodecane carboxylic acid; camporic acid; benzoic acid; t-butyl benzoic acid; $C_1$-$C_{18}$ aliphatic carboxylic acids such as acetic acid; propanoic acid; butanoic acid; hexanoic acid; oleic acid; linoleic acid; undecanoic acid; lauric acid; isononanoic acid; fatty acids; hydrogenated fatty acids of naturally occurring oils; esters and/or anhydrides of any of the aforementioned acids and combinations thereof.

The additional monomer may comprise a monohydric alcohol. "Monohydric alcohol" and like terms as used herein, refers to compounds having one hydroxyl group. Suitably, the monohydric alcohol is an organic monohydric alcohol.

Suitable examples of monohydric alcohol include but are not limited to the following: benzyl alcohol; hydroxyethoxybenzene; methanol; ethanol; propanol; butanol; pentanol; hexanol; heptanol; dodecyl alcohol; stearyl alcohol; oleyl alcohol; undecanol; cyclohexanol; phenol; phenyl carbinol; methylphenyl carbinol; cresol; monoethers of glycols; halogen-substituted or other substituted alcohols and combinations thereof.

"Aliphatic" herein includes alicyclic group which is a saturated or partially unsaturated cyclic aliphatic monocyclic or polycyclic (including fused, bridging and spiro-fused) ring system which has from 3 to 20 carbon atoms, that is an alicyclic group with 3, 4, 5, 6, 7, 8, 9, 10, 11, 12, 13, 14, 15, 16, 17, 18, 19 or 20 carbon atoms. An alicyclic group may comprise from 3 to 15, such as from 3 to 12, or from 3 to 10, or from 3 to 8 carbon atoms, for example from 3 to 6 carbons atoms.

The term "alicyclic" encompasses cycloalkyl, cycloalkenyl and cycloalkynyl groups. It will be appreciated that the alicyclic group may comprise an alicyclic ring bearing a linking or non-linking alkyl substituent, such as $-CH_2$-cyclohexyl. Specifically, examples of the $C_{3-20}$ cycloalkyl group include cyclopropyl, cyclobutyl, cyclopentyl, cyclohexyl, cycloheptyl, adamantly, isobornyl and cyclooctyl.

The term "alk" or "alkyl", as used herein unless otherwise defined, relates to saturated hydrocarbon radicals being straight, branched, cyclic or polycyclic moieties or combinations thereof and contain 1 to 20 carbon atoms, suitably 1 to 10 carbon atoms, more suitably 1 to 8 carbon atoms, still more suitably 1 to 6 carbon atoms, yet more suitably 1 to 4 carbon atoms. These radicals may be optionally substituted with a chloro, bromo, iodo, cyano, nitro, $OR^{19}$, $OC(O)R^{20}$, $C(O)R^{21}$, $C(O)OR^{22}$, $NR^{23}R^{24}$, $C(O)NR^{25}R^{26}$, $SR^{27}$, $C(O)SR^{27}$, $C(S)NR^{25}R^{26}$, aryl or heteroatom, wherein $R^{19}$ to $R^{27}$ each independently represent hydrogen, aryl or alkyl, and/or be interrupted by oxygen or sulphur atoms, or by silano or dialkylsiloxane groups. Examples of such radicals may be independently selected from methyl, ethyl, n-propyl, isopropyl, n-butyl, isobutyl, sec-butyl, tert-butyl, 2-methylbutyl, pentyl, iso-amyl, hexyl, cyclohexyl, 3-methylpentyl, octyl and the like. The term "alkylene", as used herein, relates to a bivalent radical alkyl group as defined above. For example, an alkyl group such as methyl which would be represented as $-CH_3$, becomes methylene, $-CH_2-$, when represented as an alkylene. Other alkylene groups should be understood accordingly.

The term "alkenyl", as used herein, relates to hydrocarbon radicals having a double bond, suitably up to 4, double bonds, being straight, branched, cyclic or polycyclic moieties or combinations thereof and containing from 2 to

18 carbon atoms, suitably 2 to 10 carbon atoms, more suitably from 2 to 8 carbon atoms, still more suitably 2 to 6 carbon atoms, yet more suitably 2 to 4 carbon atoms. These radicals may be optionally substituted with a hydroxyl, chloro, bromo, iodo, cyano, nitro, $OR^{19}$, $OC(O)R^{20}$, $C(O)R^{21}$, $C(O)OR^{22}$, $NR^{23}R^{24}$, $C(O)NR^{25}R^{26}$, $SR^{27}$, $C(O)SR^{27}$, $C(S)NR^{25}R^{26}$, or aryl, wherein $R^{19}$ to $R^{27}$ each independently represent hydrogen, aryl or alkyl, and/or be interrupted by oxygen or sulphur atoms, or by silano or dialkylsiloxane groups. Examples of such radicals may be independently selected from alkenyl groups include vinyl, allyl, isopropenyl, pentenyl, hexenyl, heptenyl, cyclopropenyl, cyclobutenyl, cyclopentenyl, cyclohexenyl, 1-propenyl, 2-butenyl, 2-methyl-2-butenyl, isoprenyl, farnesyl, geranyl, geranylgeranyl and the like. The term "alkenylene", as used herein, relates to a bivalent radical alkenyl group as defined above. For example, an alkenyl group such as ethenyl which would be represented as -CH=CH2, becomes ethenylene, -CH=CH-, when represented as an alkenylene. Other alkenylene groups should be understood accordingly.

The term "alkynyl", as used herein, relates to hydrocarbon radicals having a triple bond, suitably up to 4, triple bonds, being straight, branched, cyclic or polycyclic moieties or combinations thereof and having from 2 to 18 carbon atoms, suitably 2 to 10 carbon atoms, more suitably from 2 to 8 carbon atoms, still more suitably from 2 to 6 carbon atoms, yet more suitably 2 to 4 carbon atoms. These radicals may be optionally substituted with a hydroxy, chloro, bromo, iodo, cyano, nitro, $OR^{19}$, $OC(O)R^{20}$, $C(O)R^{21}$, $C(O)OR^{22}$, $NR^{23}R^{24}$, $C(O)NR^{25}R^{26}$, $SR^{27}$, $C(O)SR^{27}$, $C(S)NR^{25}R^{26}$, or aryl, wherein $R^{19}$ to $R^{27}$ each independently represent hydrogen, aryl or lower alkyl, and/or be interrupted by oxygen or sulphur atoms, or by silano or dialkylsiloxane groups. Examples of such radicals may be independently selected from alkynyl radicals include ethynyl, propynyl, propargyl, butynyl, pentynyl, hexynyl and the like. The term "alkynylene", as used herein, relates to a bivalent radical alkynyl group as defined above. For example, an alkynyl group such as ethynyl which would be represented as -C=CH, becomes ethynylene, - C=C-, when represented as an alkynylene. Other alkynylene groups should be understood accordingly.

The term "aryl" as used herein, relates to an organic radical derived from an aromatic hydrocarbon by removal of one hydrogen, and includes any monocyclic, bicyclic or polycyclic carbon ring of up to 7 members in each ring, wherein at least one ring is aromatic. These radicals may be optionally substituted with a hydroxy, chloro, bromo, iodo, cyano, nitro, $OR^{19}$, $OC(O)R^{20}$, $C(O)R^{21}$, $C(O)OR^{22}$, $NR^{23}R^{24}$, $C(O)NR^{25}R^{26}$, $SR^{27}$, $C(O)SR^{27}$, $C(S)NR^{25}R^{26}$, or aryl, wherein $R^{19}$ to $R^{27}$ each independently represent hydrogen, aryl or lower alkyl, and/or be interrupted by oxygen or sulphur atoms, or by silano or dialkylsilcon groups. Examples of such radicals may be independently selected from phenyl, p-tolyl, 4-methoxyphenyl, 4-(tert-butoxy)phenyl, 3-methyl-4-methoxyphenyl, 4-fluorophenyl, 4-chlorophenyl, 3-nitrophenyl, 3-aminophenyl, 3-acetamidophenyl, 4-acetamidophenyl, 2-methyl-3-acetamidophenyl, 2-methyl-3-aminophenyl, 3-methyl-4-aminophenyl, 2-amino-3-methylphenyl, 2,4-dimethyl-3-aminophenyl, 4-hydroxyphenyl, 3-methyl-4-hydroxyphenyl, 1-naphthyl, 2-naphthyl, 3-amino-1-naphthyl, 2-methyl-3-amino-1-naphthyl, 6-amino-2-naphthyl, 4,6-dimethoxy-2-naphthyl, tetrahydronaphthyl, indanyl, biphenyl, phenanthryl, anthryl or acenaphthyl and the like. The term "arylene", as used herein, relates to a bivalent radical aryl group as defined above. For example, an aryl group such as phenyl which would be represented as -Ph, becomes phenylene, -Ph-, when represented as an arylene. Other arylene groups should be understood accordingly.

For the avoidance of doubt, the reference to alkyl, alkenyl, alkynyl, aryl or aralkyl in composite groups herein should be interpreted accordingly, for example the reference to alkyl in aminoalkyl or alk in alkoxyl should be interpreted as alk or alkyl above etc.

The polyester material may have any suitable number-average molecular weight (Mn).

The polyester material may have an Mn of at least 500 Daltons (Da = g/mole).

The polyester material may have an Mn of at least 1000 Da.

The polyester material may have an Mn of at least 2,000 Da.

The polyester material may have an Mn of at least 3,000 Da.

The polyester material may have an Mn of at least 4,000 Da.

The polyester material may have an Mn of at least 5,000 Da.

The polyester material may have an Mn of at least 6,000 Da.

The polyester material may have an Mn of at least 7,000 Da.

The polyester material may have an Mn of at least 8,000 Da.

The polyester material may have an Mn of at least 9,000 Da.

The polyester material may have an Mn of at least 10,000 Da.

The polyester material may have an Mn of at least 15,000 Da.

The polyester material may have an Mn of up to 250,000 Da.

The polyester material may have an Mn of up to 200,000 Da.

The polyester material may have an Mn of up to 150,000 Da.

The polyester material may have an Mn of up to 100,000 Da.

The polyester material may have an Mn of up to 50,000 Da.

The polyester material may have an Mn of up to 25,000 Da.

The polyester material may have an Mn from 500 to 250,000 Da, suitably from 500 to 200,000 Da, such as

from 500 to 150,000 Da, such as from 500 to 100,000 Da, such as from 500 to 50,000 Da, or even from 500 to 25,000 Da. The polyester material may have an Mn from 1,000 to 250,000 Da, suitably from 1,000 to 200,000 Da, such as from 1,000 to 150,000 Da, such as from 1,000 to 100,000 Da, such as from 1,000 to 50,000 Da, or even from 1,000 to 25,000 Da. The polyester material may have an Mn from 2,000 to 250,000 Da, suitably from 2,000 to 200,000 Da, such as from 2,000 to 150,000 Da, such as from 2,000 to 100,000 Da, such as from 2,000 to 50,000 Da, or even from 2,000 to 25,000 Da. The polyester material may have an Mn from 3,000 to 250,000 Da, suitably from 3,000 to 200,000 Da, such as from 3,000 to 150,000 Da, such as from 3,000 to 100,000 Da, such as from 3,000 to 50,000 Da, or even from 3,000 to 25,000 Da. The polyester material may have an Mn from 4,000 to 250,000 Da, suitably from 4,000 to 200,000 Da, such as from 4,000 to 150,000 Da, such as from 4,000 to 100,000 Da, such as from 4,000 to 50,000 Da, or even from 4,000 to 25,000 Da. The polyester material may have an Mn from 5,000 to 250,000 Da, suitably from 5,000 to 200,000 Da, such as from 5,000 to 150,000 Da, such as from 5,000 to 100,000 Da, such as from 5,000 to 50,000 Da, or even from 5,000 to 25,000 Da. The polyester material may have an Mn from 6,000 to 250,000 Da, suitably from 6,000 to 200,000 Da, such as from 6,000 to 150,000 Da, such as from 6,000 to 100,000 Da, such as from 6,000 to 50,000 Da, or even from 6,000 to 25,000 Da. The polyester material may have an Mn from 7,000 to 250,000 Da, suitably from 7,000 to 200,000 Da, such as from 7,000 to 150,000 Da, such as from 7,000 to 100,000 D, such as from 7,000 to 50,000 Da, or even from 7,000 to 25,000 Da. The polyester material may have an Mn from 8,000 to 250,000 Da, suitably from 8,000 to 200,000 Da, such as from 8,000 to 150,000 Da, such as from 8,000 to 100,000 Da, such as from 8,000 to 50,000 Da, or even from 8,000 to 25,000 Da. The polyester material may have an Mn from 9,000 to 250,000 Da, suitably from 9,000 to 200,000 Da, such as from 9,000 to 150,000 Da, such as from 9,000 to 100,000 Da, such as from 9,000 to 50,000 Da, or even from 9,000 to 25,000 Da. The polyester material may have an Mn from 10,000 to 250,000 Da, suitably from 10,000 to 200,000 Da, such as from 10,000 to 150,000 Da, such as from 10,000 to 100,000 Da, such as from 10,000 to 50,000 Da, or even from 10,000 to 25,000 Da. The polyester material may have an Mn from 15,000 to 250,000 Da, suitably from 15,000 to 200,000 Da, such as from 15,000 to 150,000 Da, such as from 15,000 to 100,000 Da, such as from 15,000 to 50,000 Da, or even from 15,000 to 25,000 Da.

Suitably, the polyester material may have an Mn from 5,000 to 25,000 Da.

As reported herein, the Mn was determined by gel permeation chromatography using a polystyrene standard according to ASTM D6579-11 ("Standard Practice for Molecular Weight Averages and Molecular Weight Distribution of Hydrocarbon, Rosin and Terpene Resins by Size Exclusion Chromatography". UV detector: 254nm; solvent: unstabilised THF; retention time marker: toluene; sample concentration: 2mg/ml). All values for Mn reported herein were measured in this way unless otherwise stated.

The polyester material may have any suitable weight-average molecular weight (Mw).

The polyester material may have an Mw of at least 500 Daltons (Da = g/mole).

The polyester material may have an Mw of at least 1000 Da.

The polyester material may have an Mw of at least 2,000 Da.

The polyester material may have an Mw of at least 3,000 Da.

The polyester material may have an Mw of at least 4,000 Da.

The polyester material may have an Mw of at least 5,000 Da.

The polyester material may have an Mw of at least 6,000 Da.

The polyester material may have an Mw of at least 7,000 Da.

The polyester material may have an Mw of at least 8,000 Da.

The polyester material may have an Mw of at least 9,000 Da.

The polyester material may have an Mw of at least 10,000 Da.

The polyester material may have an Mw of at least 15,000 Da.

The polyester material may have an Mw of up to 1,250,000 Da.

The polyester material may have an Mw of up to 1,000,000 Da.

The polyester material may have an Mw of up to 750,000 Da.

The polyester material may have an Mn of up to 500,000 Da.

The polyester material may have an Mw of up to 250,000 Da.

The polyester material may have an Mw of up to 200,000 Da.

The polyester material may have an Mw of up to 150,000 Da.

The polyester material may have an Mw of up to 100,000 Da.

The polyester material may have an Mw of up to 50,000 Da.

The polyester material may have an Mw of up to 25,000 Da.

The polyester material may have an Mw from 500 to 1,250,000 Da, suitably from 500 to 1,000,000 Da, such as from 500 to 750,000 Da, such as from 500 to 500,000 Da, such as from 500 to 250,000 Da, such as from 500 to 200,000 Da, such as from 500 to 150,000 Da, such as from 500 to 100,000 Da, such as from 500 to 50,000 Da, or even from 500 to 25,000 Da. The polyester material may have an Mw from 1,000 to 1,250,000 Da, suitably from 1,000 to 1,000,000 Da, such as from 1,000 to 750,000 Da, such as from 1,000 to 500,000 Da, such as from 1,000 to 250,000

Da, such as from 1,000 to 200,000 Da, such as from 1,000 to 150,000 Da, such as from 1,000 to 100,000 Da, such as from 1,000 to 50,000 Da, or even from 1,000 to 25,000 Da. The polyester material may have an Mw from 2,000 to 1,250,000 Da, suitably from 2,000 to 1,000,000 Da, such as from 2,000 to 750,000 Da, such as from 2,000 to 500,000 Da, such as from 2,000 to 250,000 Da, such as from 2,000 to 200,000 Da, such as from 2,000 to 150,000 Da, such as from 2,000 to 100,000 Da, such as from 2,000 to 50,000 Da, or even from 2,000 to 25,000 Da. The polyester material may have an Mw from 3,000 to 1,250,000 Da, suitably from 3,000 to 1,000,000 Da, such as from 3,000 to 750,000 Da, such as from 3,000 to 500,000 Da, such as from 3,000 to 250,000 Da, such as from 3,000 to 200,000 Da, such as from 3,000 to 150,000 Da, such as from 3,000 to 100,000 Da, such as from 3,000 to 50,000 Da, or even from 3,000 to 25,000 Da. The polyester material may have an Mw from 4,000 to 1,250,000 Da, suitably from 4,000 to 1,000,000 Da, such as from 4,000 to 750,000 Da, such as from 4,000 to 500,000 Da, such as from 4,000 to 250,000 Da, such as from 4,000 to 200,000 Da, such as from 4,000 to 150,000 Da, such as from 4,000 to 100,000 Da, such as from 4,000 to 50,000 Da, or even from 4,000 to 25,000 Da. The polyester material may have an Mw from 5,000 to 1,250,000 Da, suitably from 5,000 to 1,000,000 Da, such as from 5,000 to 750,000 Da, such as from 5,000 to 500,000 Da, such as from 5,000 to 250,000 Da, such as from 5,000 to 200,000 Da, such as from 5,000 to 150,000 Da, such as from 5,000 to 100,000 Da, such as from 5,000 to 50,000 Da, or even from 5,000 to 25,000 Da. The polyester material may have an Mw from 6,000 to 1,250,000 Da, suitably from 6,000 to 1,000,000 Da, such as from 6,000 to 750,000 Da, such as from 6,000 to 500,000 Da, such as from 6,000 to 250,000 Da, such as from 6,000 to 200,000 Da, such as from 6,000 to 150,000 Da, such as from 6,000 to 100,000 Da, such as from 6,000 to 50,000 Da, or even from 6,000 to 25,000 Da. The polyester material may have an Mw from 7,000 to 1,250,000 Da, suitably from 7,000 to 1,000,000 Da, such as from 7,000 to 750,000 Da, such as from 7,000 to 500,000 Da, such as from 7,000 to 250,000 Da, such as from 7,000 to 200,000 Da, such as from 7,000 to 150,000 Da, such as from 7,000 to 100,000 D, such as from 7,000 to 50,000 Da, or even from 7,000 to 25,000 Da. The polyester material may have an Mw from 8,000 to 1,250,000 Da, suitably from 8,000 to 1,000,000 Da, such as from 8,000 to 750,000 Da, such as from 8,000 to 500,000 Da, such as from 8,000 to 250,000 Da, such as from 8,000 to 200,000 Da, such as from 8,000 to 150,000 Da, such as from 8,000 to 100,000 Da, such as from 8,000 to 50,000 Da, or even from 8,000 to 25,000 Da. The polyester material may have an Mw from 9,000 to 1,250,000 Da, suitably from 9,000 to 1,000,000 Da, such as from 9,000 to 750,000 Da, such as from 9,000 to 500,000 Da, such as from 9,000 to 250,000 Da, such as from 9,000 to 200,000 Da, such as from 9,000 to 150,000 Da, such as from 9,000 to 100,000 Da, such as from 9,000 to 50,000 Da, or even from 9,000 to 25,000 Da. The polyester material may have an Mw from 10,000 to 1,250,000 Da, suitably from 10,000 to 1,000,000 Da, such as from 10,000 to 750,000 Da, such as from 10,000 to 500,000 Da, such as from 10,000 to 250,000 Da, such as from 10,000 to 200,000 Da, such as from 10,000 to 150,000 Da, such as from 10,000 to 100,000 Da, such as from 10,000 to 50,000 Da, or even from 10,000 to 25,000 Da. The polyester material may have an Mw from 15,000 to 1,250,000 Da, suitably from 15,000 to 1,000,000 Da, such as from 15,000 to 750,000 Da, such as from 15,000 to 500,000 Da, such as from 15,000 to 250,000 Da, such as from 15,000 to 200,000 Da, such as from 15,000 to 150,000 Da, such as from 15,000 to 100,000 Da, such as from 15,000 to 50,000 Da, or even from 15,000 to 25,000 Da.

Suitably, the polyester material may have an Mw substantially equal to the Mn of the polyester or may have an Mw of up to five (5) times the Mn of the polyester material, such as up to three (3) times the Mn of the polyester material.

As reported herein, the Mw is determined by gel permeation chromatography using a polystyrene standard according to ASTM D6579-11("Standard Practice for Molecular Weight Averages and Molecular Weight Distribution of Hydrocarbon, Rosin and Terpene Resins by Size Exclusion Chromatography". UV detector: 254nm; solvent: unstabilised THF; retention time marker: toluene; sample concentration: 2mg/ml).

The polyester material may have any suitable gross hydroxyl value (OHV).

The polyester material may have a gross OHV of at least 0 mg KOH/g.

The polyester material may have an OHV of at least 5 mg KOH/g.

The polyester material may have an OHV of at least 10 mg KOH/g.

The polyester material may have an OHV of up to 150 mg KOH/g.

The polyester material may have an OHV of up to 120 mg KOH/g.

The polyester material may have an OHV of up to 110 mg KOH/g.

The polyester material may have an OHV of up to 100 mg KOH/g.

The polyester material may have an OHV from 0 to 150 mg KOH/g, suitably from 0 to 120 mg KOH/g, such as from 0 to 110 mg KOH/g, or even from 0 to 100 mg KOH/g. The polyester material may have an OHV from 5 to 150 mg KOH/g, suitably from 5 to 120 mg KOH/g, such as from 5 to 110 mg KOH/g, or even from 5 to 100 mg KOH/g. The polyester material may have an OHV from 10 to 150 mg KOH/g, suitably from 10 to 120 mg KOH/g, such as from 10 to 110 mg KOH/g, or even from 10 to 100 mg KOH/g.

Suitably, the gross hydroxyl value (OHV) is expressed on solids.

As reported herein, the hydroxyl value is the number of mg of KOH equivalent to the hydroxyl groups in 1g of material. A sample of solid polyester (0.13g) was weighed accurately into a conical flask and is dissolved, using light heating and stirring as appropriate, in 20ml of tetrahydrofuran. 10ml of 0.1M 4-(dimethylamino)pyridine in tetrahydrofuran

(catalyst solution) and 5ml of a 9 vol% solution of acetic anhydride in tetrahydrofuran (i.e. 90ml acetic anhydride in 910ml tetrahydrofuran; acetylating solution) was then added to the mixture. After 5 minutes, 10ml of an 80 vol% solution of tetrahydrofuran (i.e. 4 volume parts tetrahydrofuran to 1 part distilled water; hydrolysis solution) was added. After 15 minutes, 10ml tetrahydrofuran was added and the solution was titrated with 0.5M ethanolic potassium hydroxide (KOH). A blank sample was also run where the sample of solid polyester was omitted. The resulting hydroxyl number was expressed in units of mg KOH/g and was calculated using the following equation:

$$\text{Hydroxyl value} = \frac{(V_2 - V_1) \times \text{molarity of KOH solution (M)} \times 56.1}{\text{weight of solid sample (g)}}$$

wherein V, is the titre of KOH solution (ml) of the polyester sample and $V_2$ is the titre of KOH solution (ml) of the blank sample. All values for gross hydroxyl value reported herein were measured in this way.

The polyester material may have any suitable acid number (AN).

The polyester material may have an AN of at least 0 mg KOH/g.

The polyester material may have an AN of at least 5 mg KOH/g.

The polyester material may have an AN of at least 10 mg KOH/g.

The polyester material may have an AN of up to 150 KOH/g.

The polyester material may have an AN of up to 100 mg KOH/g.

The polyester material may have an AN of up to 50 mg KOH/g.

The polyester material may have an AN from 0 to 150 mg KOH/g, suitably from 0 to 100 mg KOH/g, such as from 0 to 50 mg KOH/g. The polyester material may have an AN from 5 to 150 mg KOH/g, suitably from 5 to 100 mg KOH/g, such as from 5 to 50 mg KOH/g. The polyester material may have an AN from 10 to 150 mg KOH/g, suitably from 10 to 100 mg KOH/g, such as from 10 to 50 mg KOH/g.

Suitably, the acid number (AN) is expressed on solids.

As reported herein, the AN was determined by titration with 0.1M methanolic potassium hydroxide (KOH) solution. A sample of solid polyester (typically 0.5 to 2.0 g) was weighed accurately into a 2 ounce glass jar and was dissolved, using light heating and stirring as appropriate, in 25ml of either 3 : 1 mass : mass THF : 1,3-propanediol or 4 : 1 mass : mass acetone : xylene. solution was then cooled to room temperature and titrated with the 0.1M methanolic potassium hydroxide solution. The end of the titration was determined electronically by the amount of titration solvent necessary to cause an inflection point in the titration curve. Periodically, phenolphthalein indicator is added as an additional way to validate the equivalence point. The resulting acid number was expressed in units of mg KOH/g and was calculated using the following equation:

$$\text{Acid number} = \frac{\text{titre of KOH solution (ml)} \times \text{molarity KOH solution (M)} \times 56.1}{\text{weight of solid sample (g)}}$$

All values for acid number reported herein were measured in this way. The polyester material may comprise the reaction product of a reaction mixture comprising;

(i) 1,2-propanediol,
(ii) terephthalic acid, and
(iii) a molecular weight increasing agent,

wherein the polyester material has a number-average molecular weight (Mn) of at least 6,100 Da and a glass transition temperature (Tg) of at least 80 °C. Further details of such polyesters are provided in European patent application number EP 3074448 and European patent application number EP 3074447.

The polyester material may be present in the coating composition in any suitable amount.

The coating composition may comprise at least 10wt% polyester material based on the total solid weight of the coating composition.

The coating composition may comprise at least 20wt% polyester material based on the total solid weight of the coating composition.

The coating composition may comprise at least 30wt% polyester material based on the total solid weight of the coating composition.

The coating composition may comprise at least 40wt% polyester material based on the total solid weight of the coating composition.

The coating composition may comprise at least 50wt% polyester material based on the total solid weight of the

coating composition.

The coating composition may comprise at least 60wt% polyester material based on the total solid weight of the coating composition.

The coating composition may comprise at least 70wt% polyester material based on the total solid weight of the coating composition.

The coating composition may comprise up to 99wt% polyester material based on the total solid weight of the coating composition.

The coating composition may comprise up to 95wt% polyester material based on the total solid weight of the coating composition.

The coating composition may comprise up to 90wt% polyester material based on the total solid weight of the coating composition.

The coating composition may comprise up to 80wt% polyester material based on the total solid weight of the coating composition.

The coating composition may comprise from 10 to 99wt%, suitably from 10 to 95wt%, such as from 10 to 90wt%, or even from 10 to 80wt% polyester material based on the total solid weight of the coating composition. The coating composition may comprise from 20 to 99wt%, suitably from 20 to 95wt%, such as from 20 to 90wt%, or even from 20 to 80wt% polyester material based on the total solid weight of the coating composition. The coating composition may comprise from 30 to 99wt%, suitably from 30 to 95wt%, such as from 30 to 90wt%, or even from 30 to 80wt% polyester material based on the total solid weight of the coating composition. The coating composition may comprise from 40 to 99wt%, suitably from 40 to 95wt%, such as from 40 to 90wt%, or even from 40 to 80wt% polyester material based on the total solid weight of the coating composition. The coating composition may comprise from 50 to 99wt%, suitably from 50 to 95wt%, such as from 50 to 90wt%, or even from 50 to 80wt% polyester material based on the total solid weight of the coating composition. The coating composition may comprise from 60 to 99wt%, suitably from 60 to 95wt%, such as from 60 to 90wt%, or even from 60 to 80wt% polyester material based on the total solid weight of the coating composition. The coating composition may comprise from 70 to 99wt%, suitably from 70 to 95wt%, such as from 70 to 90wt%, or even from 70 to 80wt% polyester material based on the total solid weight of the coating composition.

Suitably, the coating composition may comprise from 70 to 80wt% polyester material based on the total solid weight of the coating composition.

The polyester material may comprise an acrylic polyester resin. The acrylic polyester resin may comprise an acrylic modified polyester resin, which may be a polyester material having an acrylic polymer grafted thereonto.

Suitably, the acrylic polyester resin may be obtainable by grafting an acrylic polymer and a polyester material, wherein the polyester material is obtainable by polymerizing:

i) a polyacid component, with
ii) a polyol component,

and wherein one of the polyacid component or the polyol component comprises a functional monomer operable to impart functionality on to the polyester material, such that an acrylic polymer may be grafted with the polyester material via the use of said functionality.

The polyacid component or the polyol component of the polyester material of the acrylic polyester resin comprises a functional monomer operable to impart functionality to the polyester material. The functionality is such that an acrylic polymer may be grafted onto the polyester materail via the use of said functionality. The functionality may comprise ethylenic unsaturation, carboxylic acid functionality or epoxy functionality. The functionality may be in the backbone of the polyester material or pendant therefrom.

The functional monomer may comprise an ethylenically unsaturated monomer, which ethylenically unsaturated monomer may be operable to impart ethylenically unsaturated functionality on the backbone of the polyester material, or pendant therefrom. Suitably, the functionality may comprise ethylenic unsaturation, which may be in the backbone of the polyester material.

Suitable functional monomers comprise: maleic acid, maleic anhydride, fumaric acid, itaconic anhydride, itaconic acid, citraconic anhydride, citraconic acid, aconitic acid, aconitic anhydride, oxalocitraconic acid, oxalocitraconic anhydride, mesaconic acid, mesaconic anhydride, phenyl maleic acid, phenyl maleic anhydride, t-butyl maleic acid, t-butyl maleic anhydride, monomethyl fumarate, monobutyl fumarate, nadic acid, nadic anhydride, methyl maleic acid, methyl maleic anhydride, and/or trimethylolpropane monoallyl ether.

Where the functional monomer comprises a polyacid, the functional monomer may be present as a proportion of the dry weight of the polyacid component in an amount of from 0.5 to 10wt%, suitably from 1 to 5wt%.

Where the functional monomer comprises a polyol, the functional monomer may be present as a proportion of the dry weight of the polyol component in an amount of from 0.5 to 10wt%, suitably from 1 to 5wt%.

Suitably, the functional monomer of the polyester material of the acrylic polyester resin may comprise maleic

acid, maleic anhydride and/or fumaric acid.

The polyester material of the acrylic polyester resin is suitably modified with acrylic by grafting an acrylic modification polymer onto the polyester material. This grafting may occur via free radical polymerization, such as by free radical polymerization onto ethylenic unsaturation on the polyester material.

Suitably, the acrylic modification polymer is formed from acrylic monomers. Suitably, the acrylic modification polymer is grafted onto the polyester material by polymerizing acrylic monomers in the presence of the polyester material to form the acrylic modified polyester resin.

Various acrylic monomers can be combined to prepare the acrylic modification polymer. Examples include methyl(meth)acrylate, ethyl(meth)acrylate, butyl (meth)acrylate, isobornyl (meth)acrylate, hydroxyethyl (meth)acrylate, 2-ethylhexyl(meth)acrylate, (meth)acrylic acid, nitriles such as (meth)acrylonitrile. Any other acrylic monomers known to those skilled in the art could also be used. The term "(meth) acrylate" and like terms are used conventionally and herein to refer to both methacrylate and acrylate. A suitable acrylic modification polymer is formed with: methyl (meth)acrylate, ethyl(meth)acrylate, butyl (meth)acrylate, hydroxyethyl (meth)acrylate, (meth)acrylic acid, cyclohexyl (meth)acrylate, allyl (meth)acrylate, dimethylamino ethyl methacrylate. butylamino ethyl (meth)acrylate, and/or HEMA phosphate (such as ethylene glycol methacrylate phosphate.

The acrylic monomers may comprise a ratio of methacrylate monomers to acrylate monomers of at least 1:1, such as at least 2:1 or at least 3:1 or at least 4:1, suitably at least 5:1. The acrylic monomers may be substantially free of acrylate monomers. By "methacrylate monomers" and "acrylate monomers" with regard to the ratio of these types of monomers in the acrylic monomers of the acrylic modification polymer, it is meant the total number of methacrylate monomers compared to the total number of acrylate monomers across all the types of acrylic monomer that form the acrylic modification polymer. For example, if the acrylic modification polymer is formed of methylmethacrylate, methyl acrylate and butyl acrylate, then the amount of methylmethacrylate compared to the combined amount of methyl acrylate and butyl acrylate would be at least 5:1.

The acrylic monomers may comprise a hydroxyl functional monomer, such as hydroxyethyl (meth)acrylate. Suitably, the hydroxyl functional monomer is present by dry weight of the acrylic modification polymer in an amount of from 5 to 40wt%, such as from 5 to 30wt% or from 10 to 20wt%.

The acrylic modification polymer may also comprise an amount (0 to 30w%, by dry weight of the acrylic modification polymer) of non acrylic monomers. Such non acrylic monomers may include other ethylenically unsaturated monomers, such as styrene, ethylene, propylene, vinyl toluene, butadiene, 1-octene or isoprene, vinyl esters such as vinyl acetate.

It has been identified that the acrylic modification polymer may suitably include meth acrylic acid or acrylic acid to impart acid functionality on the acrylic modification polymer. Suitably, the acid functionality on the acrylic modification polymer may be at least partially neutralised with a neutralisation agent.

The Tg of the acrylic modification polymer (which is a measure of the Tg of the acrylic modification polymer, polymerized as a simple acrylic polymer, not in the presence of (or grafted onto) a polyester resin) may be from 20 to 120°C. The Tg of the acrylic modification polymer can be calculated by the Fox equation as provided in "Coatings of Polymers and Plastics", Ryntz R. A. and Yaneff P. V, CRC Press, 4 February 2003, page 134.

Suitable neutralisation agents include ammonia or amine functional moieties: methyl ethanolamine, dimethylethanolamine (DMEA), trimethylamine, diethylene triamine.

Suitably, the acid functionality on the acrylic modification polymer may be at least 30% neutralised with a neutralisation agent. Suitably, the acid functionality on the acrylic modification polymer may be at least 50% neutralised with a neutralisation agent. Suitably, the acid functionality on the acrylic modification polymer may be at least 75% neutralised with a neutralisation agent.

The acrylic polyester resin may have any suitable acid value (AV). The acrylic polyester resin may have an AV from 10 to 80 KOH/g. Suitably, the acrylic polyester resin may have a gross AV from 20 to 70 mg KOH/g, such as from 30 to 60 mg KOH/g. The AV is suitably expressed on solids.

Suitably, the acrylic polyester resin is formed from the polyester material and the acrylic modification polymer in a weight ratio of from 95wt% to 55wt% polyester material to from 45wt% to 5wt% acrylic modification polymer, such as a weight ratio of from 90wt% to 60wt% polyester material to from 40wt% to 10wt% acrylic modification polymer, such as a weight ratio of from 85wt% to 65wt% polyester material to from 35wt% to 15wt% acrylic modification polymer. For example, the acrylic polyester resin may be formed from the polyester material and the acrylic modification polymer in a weight ratio of 85wt% polyester material to 15wt% acrylic polymer.

Where the polyester material comprises a sulfonated monomer, neutralisation of the acrylic polyester resin may not be required.

The coating composition may have any suitable Young's modulus. The coating composition may have a Young's modulus of 0.5 to 3 gigapascal (GPa), suitably 1.0 to 2.5 GPa, such as 1.5 to 2.0 GPa. Suitably, the coating composition may have a Young's modulus of 1.8 GPa.

A cured film formed from the coating composition may have a Young's modulus of ≥0.5 GPa, suitably ≥0.6

GPa, or ≥0.7 GPa, or ≥0.8 GPa, such as ≥0.9 GPa, ≥1.0 GPa, ≥1.1 GPa, ≥1.2 GPa, ≥1.3 GPa, ≥1.4GPa or ≥1.5GPa.

The Young's modulus as reported herein was measured by tensile strength testing of a free film according to ASTM D2370-16 "Tensile Properties of Organic Coatings": sample dimensions 122mm x 12mm x 10-20μm; strain rate 20mm/min; temperature 23°C. Advantageously, the use of a coating composition having a Young's modulus of 0.5 to 3 GPa means that the coating composition has an appropriate tensile strength such that it substantially fully shears in the region of the score line when the beverage can is opened. This helps to facilitate sufficient venting.

The coating composition of the present invention may be a liquid coating composition or a powder coating composition.

It will be appreciated that the coating composition of the present invention is appropriately formulated to be suitable for application to a can end over a score line. The formation of a can end may comprise applying a coating composition to metal coil and curing the coating composition to form a cured film. The coated coil then undergoes pressing, bending and stamping to transform the coil into the can end. The coating shouldtherefore be able to withstand these mechanical requirements. For example, the coating composition may have sufficient flexibility, adhesion to substrate, hardness and/or lubricity.The coating composition may further comprise a second polyester material in addition to the polyester material..

The second polyester material may comprise any suitable polyester material. The second polyester material may comprise the reaction product of a polyacid and a polyol.

The polyacid of the second polyester material may suitably comprise an organic polyacid.

The carboxylic acid groups of the polyacid of the second polyester material may be connected by a bridging group selected from: an alkylene group; an alkenylene group; an alkynylene group; or an arylene group.

The second polyester material may be formed from any suitable polyacid. Suitable examples of polyacids include, but are not limited to the following: maleic acid; fumaric acid; itaconic acid; adipic acid; azelaic acid; succinic acid; sebacic acid; glutaric acid; decanoic diacid; dodecanoic diacid; phthalic acid; isophthalic acid; 5-tert-butylisophthalic acid; tetrachlorophthalic acid; tetrahydrophthalic acid; trimellitic acid; naphthalene dicarboxylic acid; naphthalene tetracarboxylic acid; terephthalic acid; hexahydrophthalic acid; methylhexahydrophthalic acid; dimethyl terephthalate; cyclohexane dicarboxylic acid; chlorendic anhydride; 1,3-cyclohexane dicarboxylic acid; 1,4-cyclohexane dicarboxylic acid; tricyclodecane polycarboxylic acid; endomethylene tetrahydrophthalic acid; endoethylene hexahydrophthalic acid; cyclohexanetetra carboxylic acid; cyclobutane tetracarboxylic; esters and anhydrides of all the aforementioned acids and combinations thereof.

The second polyester material may be formed from a diacid. The second polyester material may be formed from any suitable diacid. Suitable examples of diacids include, but are not limited to the following: phthalic acid; isophthalic acid; terephthalic acid; 1,4 cyclohexane dicarboxylic acid; succinic acid; adipic acid; azelaic acid; sebacic acid; fumaric acid; 2,6-naphthalene dicarboxylic acid; orthophthalic acid; phthalic anhydride; tetrahydrophthalic anhydride; maleic anhydride; succinic anhydride; itaconic anhydride; di-ester materials, such as dimethyl ester derivatives for example dimethyl isophthalate, dimethyl terephthalate, dimethyl 1,4-cyclohexane dicarboxylate, dimethyl 2,6-naphthalene di carboxylate, dimethyl fumarate, dimethyl orthophthalate, dimethylsuccinate, dimethyl glutarate, dimethyl adipate; esters and anhydrides of all the aforementioned acids; and mixtures thereof.

Suitably, the diacid of the second polyester material may comprise isophthalic acid, phthalic acid, maleic anhydride and combinations thereof.

Suitably, the polyol of the second polyester material may comprise an organic polyol.

The second polyester material may be formed from any suitable polyol. Suitable examples of polyols include, but are not limited to the following: alkylene glycols, such as ethylene glycol; propylene glycol; diethylene glycol; dipropylene glycol; triethylene glycol; tripropylene glycol; hexylene glycol; polyethylene glycol; polypropylene glycol and neopentyl glycol; hydrogenated bisphenol A; cyclohexanediol; propanediols including 1,2-propanediol; 1,3-propanediol; butyl ethyl propanediol; 2-methyl-1,3-propanediol; and 2-ethyl-2-butyl-1,3-propanediol; butanediols including 1,4-butanediol; 1,3-butanediol; 2,2,4,4-tetramethyl-1,3-cyclobutanediol; and 2-ethyl-1,4-butanediol; pentanediols including trimethyl pentanediol and 2-methylpentanediol; cyclohexanedimethanol; hexanediols including 1,6-hexanediol; caprolactonediol (for example, the reaction product of epsilon-capro lactone and ethylene glycol); hydroxyalkylated bisphenols; polyether glycols, for example, poly(oxytetramethylene) glycol; trimethylol propane; pentaerythritol; di-pentaerythritol; trimethylol ethane; trimethylol butane; dimethylol cyclohexane; glycerol and the like or combinations thereof.

The second polyester material may be formed from a diol. The second polyester material may be formed from any suitable diol. Suitable examples of diols include, but are not limited to the following: ethylene glycol; 1,2-propane diol; 1,3-propane diol; 1,2-butandiol; 1,3-butandiol; 1,4-butandiol; but-2-ene 1,4-diol; 2,3-butane diol; 2-methyl 1,3-propane diol; 2,2'-dimethyl 1,3-propanediol (neopentyl glycol); 1,5 pentane diol; 3-methyl 1,5-pentanediol; 2,4-diethyl 1,5-pentane diol; 1,6-hexane diol; 2-ethyl 1,3-hexane diol; diethylene glycol; triethylene glycol; dipropylene glycol; tripropylene glycol; 2,2,4-trimethyl pentane 1,3-diol; 1,4 cyclohexane dimethanol; tricyclodecane dimethanol; 2,2,4,4-tetramethyl cyclobutane 1,3-diol; isosorbide; 1,4-cyclohexane diol; 1,1'-isopropylidene-bis (4-cyclohexanol); and mixtures thereof.

Suitably, the diol of the second polyester material may comprise 2-methyl-1,3-propanediol, cyclohexanedimethanol and combinations thereof.

The second polyester material may optionally be formed from additional monomers. The second polyester material may optionally include an additional monomer selected from monoacids or monohydric alcohols or combinations thereof. Suitably, the optional additional monomer of the second polyester material may be organic.

The second polyester material may optionally be formed from additional monoacids. The monoacid of the second polyester is suitably an organic monoacid.

The second polyester material may optionally be formed from any suitable additional monoacid. Suitable examples include, but are not limited to the following: benzoic acid; cyclohexane carboxylic acid; tricyclodecane carboxylic acid; camporic acid; benzoic acid; t-butyl benzoic acid; $C_1$-$C_{18}$ aliphatic carboxylic acids such as acetic acid; propanoic acid; butanoic acid; hexanoic acid; oleic acid; linoleic acid; undecanoic acid; lauric acid; isononanoic acid; fatty acids; hydrogenated fatty acids of naturally occurring oils; esters and/or anhydrides of any of the aforementioned acids and combinations thereof.

The second polyester material may optionally be formed from additional monohydric alcohols. Suitably, the monohydric alcohol of the second polyester material is an organic monohydric alcohol.

The second polyester material may optionally be formed from any suitable additional monohydric alcohol. Suitable examples include but are not limited to the following: benzyl alcohol; hydroxyethoxybenzene; methanol; ethanol; propanol; butanol; pentanol; hexanol; heptanol; dodecyl alcohol; stearyl alcohol; oleyl alcohol; undecanol; cyclohexanol; phenol; phenyl carbinol; methylphenyl carbinol; cresol; monoethers of glycols; halogen-substituted or other substituted alcohols and combinations thereof.

The coating composition may comprise an adhesion promoter. The adhesion promoter may comprise an acidic polyester. The second polyester material may comprise an acidic polyester.

The adhesion promoter, which may comprise an acidic polyester may be added in an amount of from 0.1 to 15wt% (based on the dry weight of the coatings ingredients), more suitably from 2 to 12wt% (based on the dry weight of the coatings ingredients). The acidic polyester may be present in an amount of from 4 to 10wt% (based on the dry weight of the coatings ingredients).

The acidic polyester may comprise a reaction product of a polyester with a phosphorus acid, such as phosphoric acid. In this context, the polyester may have an Mn of 2000 to 10,000. The polyester may have a hydroxyl number of 20 to 75. The polyester may have an acid value of 15 to 25.

Suitably, the acidic polyester may comprise a solution of a copolymer with acidic groups having an acid value from 15 up to 100 mgKOH/g. Examples of commercially available suitable acidic polyesters include are BYK-4510 (commercially available from Byk Altana) or PLUSOLIT H-PD (commercially available from Mäder) or BORCHI GEN HMP-F or BORCHI GEN HE (commercially available from OMG Borchers).

Suitably, the acidic polyester may comprise the reaction product of a reaction mixture comprising;

(a) a precursor polyester resin, the precursor polyester resin being a polycondensate of:

(I) a polyol component comprising a mixture of diols and triols; and
(II)a polyacid component comprising alpha,beta-unsaturated polycarboxylic acid; and

(b) a phosphorous acid.

The second polyester material may have any suitable glass transition temperature (Tg).

Suitably, the second polyester material may have a glass transition temperature (Tg) of from -20°C to 30°C, such as from -10 to 0°C.

Suitably, the second polyester material may have an Mn from 2,000 to 10,000 Da.

Suitably, the second polyester may have an Mn from 4,000 to 10,000 Da.

Suitably, the second polyester material may have an Mw from 2,000 to 10,000 Da.

Suitably, the second polyester may have an Mw from 4,000 to 10,000 Da.

Suitably, the second polyester material may have an Mw substantially equal to the Mn of the second polyester or may have an Mw of up to five (5) times the Mn of the second polyester material, such as up to three (3) times the Mn of the secondpolyester material. The second polyester material may have any suitable gross hydroxyl value (OHV).

Suitably, the second polyester material may have an AN from 15 to 25 mg KOH/g.

The coating composition may comprise any suitable amount of second polyester material.

The coating composition may comprise at least 0.5 wt% second polyester material based on the total solid weight of the coating composition.

The coating composition may comprise at least 1wt% second polyester material based on the total solid weight of the coating composition.

The coating composition may comprise at least 2wt% second polyester material based on the total solid weight

of the coating composition.

The coating composition may comprise at least 3 wt% second polyester material based on the total solid weight of the coating composition.

The coating composition may comprise up to 10wt% second polyester material based on the total solid weight of the coating composition.

The coating composition may comprise up to 8wt% second polyester material based on the total solid weight of the coating composition.

The coating composition may comprise up to 5wt% second polyester material based on the total solid weight of the coating composition.

The coating composition may comprise from 0.5 to 5wt%, suitably from 1 to 5wt%, such as from 2 to 5wt%, or even from 3 to 5wt% second polyester material based on the total solid weight of the coating composition.

Suitably, the coating composition may comprise 3 to 5wt% second polyester material based on the total solid weight of the coating composition.

The first polyester material and second polyester material may be present in the coating composition any suitable weight ratio.

The weight ratio of the first polyester material to the second polyester material may be up to 99:1.

The weight ratio of the first polyester material to the second polyester material may be up to 97:3.

The weight ratio of the first polyester material to the second polyester material may be at least 80:20.

The weight ratio of the first polyester material to the second polyester material may be at least 90:10.

Suitably, the weight ratio of the first polyester material to the second polyester material may be 99:1 to 60:40.

Suitably, the weight ratio of the first polyester material to the second polyester material may be 99:1 to 95:5.

The coating composition may comprise a crosslinking material.

The coating composition may comprise any suitable crosslinking material. Suitable crosslinking materials will be well known to the person skilled in the art.

The crosslinking material may be operable to crosslink the polyester material.

The crosslinking material may be a single molecule, a dimer, an oligomer, a (co)polymer or a mixture thereof. The crosslinking material may be a dimer or trimer.

Suitable crosslinking materials include, but are not limited to one or more of the following: phenolic resins (or phenol-formaldehyde resins); aminoplast resins (or triazine-formaldehyde resins); amino resins; epoxy resins; isocyanate resins; beta-hydroxy (alkyl) amide resins; alkylated carbamate resins; polyacids; anhydrides; organometallic acid-functional materials; polyamines; polyamides and combinations thereof.

Suitable examples of phenolic resins are those formed from the reaction of a phenol with an aldehyde or a ketone, suitably from the reaction of a phenol with an aldehyde, such as from the reaction of a phenol with formaldehyde or acetaldehyde, or even from the reaction of a phenol with formaldehyde. Non-limiting examples of phenols which may be used to form phenolic resins are phenol, butyl phenol, xylenol and cresol. General preparation of phenolic resins is described in "The Chemistry and Application of Phenolic Resins or Phenoplasts", Vol V, Part I, edited by Dr Oldring; John Wiley and Sons/Cita Technology Limited, London, 1997. Suitably, the phenolic resins are of the resol type. By "resol type" we mean resins formed in the presence of a basic (alkaline) catalyst and optionally an excess of formaldehyde. Suitable examples of commercially available phenolic resins include, but are not limited to those sold under the trade name PHENODUR (RTM) commercially available from Allnex, such as PHENODUR EK-827, PHENODUR VPR1785, PHENODUR PR 515, PHENODUR PR516, PHENODUR PR 517, PHENODUR PR 285, PHENODUR PR612 or PHENODUR PH2024; resins sold under the trade name BAKELITE (RTM) commercially available from Sumitomo Bakelite co., ltd., such as BAKELITE 6582 LB, BAKELITE 6535, BAKELITE PF9989 or BAKELITE PF6581; SFC 112 commercially available from SI Group; DUREZ (RTM) 33356 commercially available from SHHPP; ARALINK (RTM) 40-852 commercially available from Bitrez; or combinations thereof.

Suitable examples of isocyanate resins include, but are not limited to the following: isophorone diisocyanate (IPDI), such as those sold under the trade name DESMODUR (RTM) commercially available from Cevstro, for example DESMODUR VP-LS 2078/2 or DESMODUR PL 340 or those sold under the trade name VESTANAT (RTM) commercially available from Evonik, for example VESTANANT B 1370, VESTANAT B 118 6A or VESTANAT B 1358 A; blocked aliphatic polyisocyanate based on hexamethylene diisocyanate (HDI), such as those sold under the trade name DESMODUR (RTM) commercially available from Covestro, for example DESMODUR BL3370 or DESMODUR BL 3175 SN, those sold under the trade name DURANATE (RTM) commercially available from Asahi KASEI, for example DURANATE MF-K60X, those sold under the trade name TOLONATE (RTM) commercially available from Vencorex Chemicals, for example TOLONATE D2 or those sold under the trade name TRIXENE (RTM) commercially available from Baxenden, for example TRIXENE-BI-7984 or TRIXENE 7981; or combinations thereof.

The crosslinking material may contain nitrogen. The crosslinking material may be in the form of an amine or amide material. The crosslinking material may comprise a hydroxyl substituted amine or amide material.

Suitably, the crosslinking material may comprise a hydroxyalkylamide material, such as a β-hydroxyalkylamide

material.

The crosslinking material may contain a terminal chemical group as shown in Formula I.

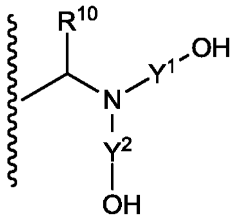

Formula I

wherein $R^{10}$ represents an electron withdrawing group, such as (=O); and $Y^1$ and $Y^2$ each, independently, represents a $C_1$ to $C_3$ alkylene group.

The terminal chemical group of Formula I may be connected to a further chemical structure, not shown. Additionally or alternatively, the chemical group of formula I may be suspended from a carrier substrate, such as a silica carrier substrate, for example.

The crosslinking material may contain a plurality of terminal chemical groups as shown in Formula I. For example, the crosslinking material may contain 2, 3 or 4 terminal chemical groups as shown in Formula I.

The crosslinking material may comprise a moiety according to Formula II:

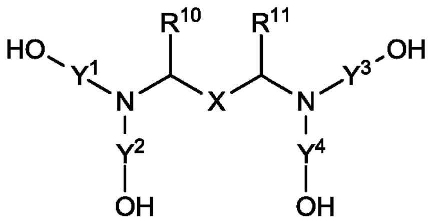

Formula II

wherein $R^{10}$ and $R^{11}$ each, independently, represent an electron withdrawing group, such as (=O);
$Y^1$, $Y^2$, $Y^3$ and $Y^4$ each, independently, represent a $C_1$ to $C_3$ alkylene group; and
X represents a $C_2$ to $C_6$ alkylene group.

Suitably, each of $R^{10}$ and $R^{11}$ represents a (=O) group.

Suitably, each of $Y^1$, $Y^2$, $Y^3$ and $Y^4$ represent an ethylene group.

Suitably, X represents a butylene group.

Accordingly, the crosslinking material may comprise a material of formula III:

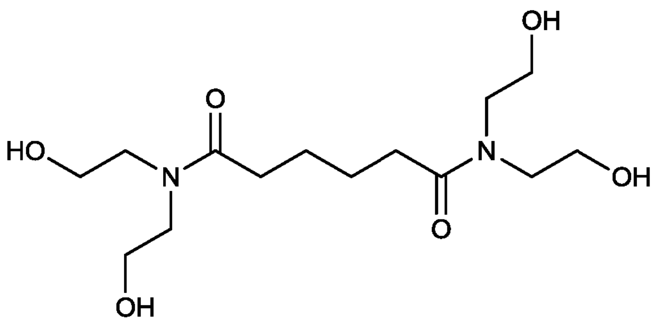

Formula III

The crosslinking material may comprise a commercially available β-hydroxyalkylamide crosslinking, such as, for example, PRIMID XL-552 (available from EMS); PRIMID QM-1260 (available from EMS Chemie); and N,N,N',N'-tetrakis(2-hydroxypropyl)adipamide.

The crosslinking material may be in the form of a urea material. The crosslinking material may comprise a

hydroxyl substituted urea material. Suitably, the crosslinking material may comprise a hydroxy functional alkyl polyurea material.

Suitably, the hydroxy functional alkyl polyurea material may comprise a material having the formula:

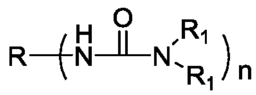

wherein R comprises an isocyanurate moiety, biuret moiety, allophonate moiety, glycoluril moiety, benzoguanamine moiety, polyetheramine moiety, and/or polymeric moiety different from a polyetheramine and having an Mn of 500 or greater; wherein each R1 is independently a hydrogen, alkyl having at least 1 carbon, or a hydroxy functional alkyl having 2 or more carbons and at least one R1 is a hydroxy functional alkyl having 2 or more carbons; and n is 2-6.

Suitably, the hydroxy functional alkyl polyurea material may comprise a material having the formula:

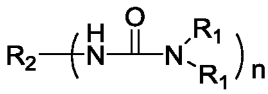

wherein R2 is a substituted or unsubstituted C1 to C36 alkyl group, an aromatic group, an isocyanurate moiety, biuret moiety, allophonate moiety, glycoluril moiety, benzoguanamine moiety, polyetheramine moiety, and/or polymeric moiety different from a polyetheramine and having an Mn of 500 or greater; wherein each R1 is independently a hydrogen, an alkyl having at least 1 carbon, or a hydroxy functional alkyl having 2 or more carbons and at least one R1 is a hydroxyl functional alkyl having 2 or more carbons; and n is 2-6.

Further details of suitable hydroxy functional alkyl polyurea materials are disclosed in PCT patent application WO 2017/123955.

Suitable examples of aminoplast resins include those which are formed by reacting a triazine such as melamine or benzoguanamine with formaldehyde. Suitably, these condensates may be etherified, typically, with methanol, ethanol, butanol or mixtures thereof. For the chemistry, preparation and use of aminoplast resins, see "The Chemistry and Applications of Amino Crosslinking agents or Aminoplast", Vol. V, Part 11, page 21 ff., edited by Dr. Oldring; John Wiley & Sons/Cita Technology Limited, London, 1998. Suitable examples of commercially available aminoplast resins include, but are not limited to, those sold under the trade name MAPRENAL (registered trade mark), such as MAPRENAL MF980 (commercially available from Ineos); those sold under the trade name CYMEL (registered trade mark), such as CYMEL 303 and CYMEL 1128 (available from Allnex Industries); and combinations thereof.

The crosslinking material may be present in the coating composition in any suitable amount.

The coating compositions may comprise at least 0.5 wt% crosslinking material based on the total solid weight of the coating composition.

The coating compositions may comprise at least 1 wt% crosslinking material based on the total solid weight of the coating composition.

The coating compositions may comprise at least 5 wt% crosslinking material based on the total solid weight of the coating composition.

The coating compositions may comprise at least 10 wt% crosslinking material based on the total solid weight of the coating composition.

The coating compositions may comprise at least 15wt% crosslinking material based on the total solid weight of the coating composition.

The coating compositions may comprise at least 20wt% crosslinking material based on the total solid weight of the coating composition.

The coating compositions may comprise up to 70wt% crosslinking material based on the total solid weight of the coating composition.

The coating compositions may comprise up to 60wt% crosslinking material based on the total solid weight of the coating composition.

The coating compositions may comprise up to 50wt% crosslinking material based on the total solid weight of the coating composition.

The coating compositions may comprise up to 40wt% crosslinking material based on the total solid weight of the coating composition.

The coating compositions may comprise up to 30wt% crosslinking material based on the total solid weight of the coating composition.

The coating compositions may comprise up to 25wt% crosslinking material based on the total solid weight of the coating composition.

The coating compositions may comprise up to 20wt% crosslinking material based on the total solid weight of the coating composition.

The coating composition may comprise from 0.5 to 90wt%, or 1 to 90wt%, suitably from 1 to 80wt%, such as from 1 to 70wt%, such as from 1 to 60wt%, such as from 1 to 50wt%, such as from 1 to 40wt%, such as from 1 to 30wt%, or even from 1 to 25wt% crosslinking material based on the total solid weight of the coating composition. The coating composition may comprise from 5 to 90wt%, suitably from 5 to 80wt%, such as from 5 to 70wt%, such as from 5 to 60wt%, such as from 5 to 50wt%, such as from 5 to 40wt%, such as from 5 to 30wt%, or even from 5 to 25wt% crosslinking material based on the total solid weight of the coating composition. The coating composition may comprise from 10 to 90wt%, suitably from 10 to 80wt%, such as from 10 to 70wt%, such as from 10 to 60wt%, such as from 10 to 50wt%, such as from 10 to 40wt%, such as from 10 to 30wt%, or even from 10 to 25wt%, or 5 to 20wt%, crosslinking material based on the total solid weight of the coating composition. The coating composition may comprise from 15 to 90wt%, suitably from 15 to 80wt%, such as from 15 to 70wt%, such as from 15 to 60wt%, such as from 15 to 50wt%, such as from 15 to 40wt%, such as from 15 to 30wt%, or even from 15 to 25wt% crosslinking material based on the total solid weight of the coating composition. The coating composition may comprise from 20 to 90wt%, suitably from 20 to 80wt%, such as from 20 to 70wt%, such as from 20 to 60wt%, such as from 20 to 50wt%, such as from 20 to 40wt%, such as from 20 to 30wt%, or even from 20 to 25wt% crosslinking material based on the total solid weight of the coating composition.

Suitably, the coating composition may comprise from 15 to 25wt% crosslinking material based on the total solid weight of the coating composition.

Suitably, the crosslinking material may comprise an aminoplast resin.

The crosslinking material may comprise material according to formula (XIII)

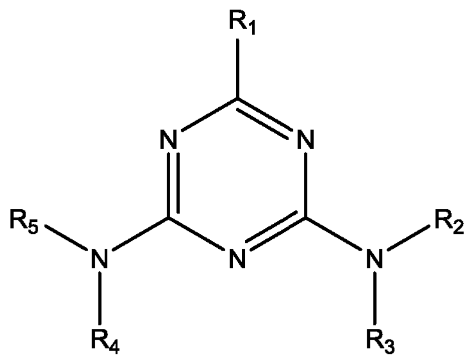

(XIII)

wherein $R_1$ is hydrogen, alkyl (such as $C_1$ to $C_{20}$ alkyl), aryl (such as $C_4$ to $C_{24}$ aryl), aralkyl (such as $C_5$ to $C_{25}$ aralkyl), or $-NR_6R_7$;

$R_2$ to $R_7$ are each independently hydrogen, alkyl (such as $C_1$ to $C_{20}$ alkyl), aryl (such as $C_4$ to $C_{24}$ aryl), aralkyl (such as $C_5$ to $C_{25}$ aralkyl) or-$CHR_8OR_9$;

wherein $R_8$ and $R_9$ are each independently hydrogen, alkyl (such as $C_1$ to $C_{20}$ alkyl), aryl (such as $C_4$ to $C_{24}$ aryl), aralkyl (such as $C_5$ to $C_{25}$ aralkyl), alkoxyalkyl (such as $C_2$ to $C_{40}$ alkoxyalkyl) or an alkaryl (such as $C_5$ to $C_{25}$ alkaryl);

wherein at least one of $R_2$ to $R_5$, or $R_2$ to $R_7$ when present, is $-CHR_8OR_9$, suitably all of $R_2$ to $R_5$, or $R_2$ to $R_7$ when present, are $-CHR_8OR_9$.

Suitably, in the crosslinking material according to formula (XIII), $R_1$ is $C_1$ to $C_{20}$ alkyl, $C_4$ to $C_{24}$ aryl, $C_5$ to $C_{25}$ aralkyl, or $-NR_6R_7$; such as $C_4$ to $C_{24}$ aryl or $C_5$ to $C_{25}$ aralkyl, or $C_4$ to $C_{24}$ aryl, suitably $C_4$ to $C_{12}$ aryl, such as $C_6$ aryl.

In the crosslinking material according to formula (XIII), $R_1$ may be $-NR_6R_7$.

In the crosslinking material according to formula (XIII), $R_2$ to $R_7$, when present as applicable, may each be independently hydrogen, $C_1$ to $C_{20}$ alkyl, $C_4$ to $C_{24}$ aryl or $-CHR_8OR_9$;, such as hydrogen, $C_1$ to $C_{20}$ alkyl or $-CHR_8OR_9$, such as hydrogen, $C_1$ to $C_{10}$ alkyl or - $CHR_8OR_9$; such as $C_1$ to $C_5$ alkyl or $-CHR_8OR_9$, suitably $-CHR_8OR_9$.

In the crosslinking material according to formula (XIII), $R_2$ to $R_7$, when present as applicable, may each be independently hydrogen, $C_1$ to $C_{20}$ alkyl, $C_4$ to $C_{24}$ aryl or $-CHR_8OR_9$;, such as hydrogen, $C_1$ to $C_{20}$ alkyl or $-CHR_8OR_9$, such as hydrogen, $C_1$ to $C_{10}$ alkyl or - $CHR_8OR_9$; such as $C_1$ to $C_5$ alkyl or $-CHR_8OR_9$, suitably $-CHR_8OR_9$, and $R_8$ may be independently be hydrogen, $C_1$ to $C_{20}$ alkyl, $C_4$ to $C_{24}$ aryl, $C_5$ to $C_{25}$ aralkyl, alkoxyalkyl $C_2$ to $C_{40}$ alkoxyalkyl or $C_5$ to $C_{25}$ alkaryl, such as hydrogen, $C_1$ to $C_{20}$ alkyl, suitably hydrogen; and $R_9$ may be hydrogen, $C_1$ to $C_{20}$ alkyl, $C_4$ to $C_{24}$ aryl, $C_5$ to $C_{25}$ aralkyl, alkoxyalkyl $C_2$ to $C_{40}$ alkoxyalkyl or $C_5$ to $C_{25}$ alkaryl; such as hydrogen, $C_1$ to $C_{20}$ alkyl; suitably $C_1$ to $C_{20}$ alkyl, or $C_1$ to $C_{10}$ alkyl, or $C_1$ to $C_5$ alkyl, such as $C_1$ or $C_2$ alkyl.

The crosslinking material according to formula (XIII) may be formed by reacting a triazine such as melamine or benzoguanamine with formaldehyde. Suitably, these condensates may be etherified, typically, with methanol, ethanol, butanol or mixtures thereof. For the chemistry, preparation and use of aminoplast resins, see "The Chemistry and Applications of Amino Crosslinking agents or Aminoplast", Vol. V, Part 11, page 21 ff., edited by Dr. Oldring; John Wiley & Sons/Cita Technology Limited, London, 1998.

The crosslinking material according to formula (XIII) may comprise melamine or derivatives thereof, such as butylated and/or methylated melamine; and/or benzoguanamine or derivatives thereof, such as butylated and/or methylated benzoguanamine. Suitably, the crosslinking material according to formula (XIII) may comprise benzoguanamine or derivatives thereof, such as butylated and/or methylated benzoguanamine.

The crosslinking material according to formula (XIII) may form at least 50wt% of the crosslinking material of the coating composition, such as at least 60wt%, at least 70wt%, at least 80wt%, at least 90wt%, at least 95wt% or at least 98wt% such as at least 99wt% of the crosslinking material of the coating composition.

Suitably, the crosslinking material may comprise those which are formed by reacting a triazine, such as melamine or benzoguanamine, with formaldehyde.

Suitably, the crosslinking material may comprise benzoguanamine or a derivative thereof.

The benzoguanamine or derivative thereof may comprise commercially available benzoguanamine or derivative thereof. Suitable examples of commercially available benzoguanamine and its derivatives include, but are not limited to benzoguanamine-formaldehyde based materials such as those sold under the trade name CYMEL (registered trade mark), for example CYMEL 1123 (commercially available from Allnex Industries), those sold under the trade name ITAMIN (registered trade mark), for example ITAMIN BG143 (commercially available from Galstaff Multiresine) or those sold under the trade name MAPRENAL (registered trade mark), for example, MAPRENAL BF892 and MAPRENAL BF 892/68B (commercially available from Ineos); glycoluril based materials, such as those sold under the trade name CYMEL (registered trade mark), for example, CYMEL 1170 and CYMEL 1172 (commercially available from Allnex); and combinations thereof.

Suitably, the benzoguanamine or derivative thereof may comprise benzoguanamine-formaldehyde based materials sold under the trade name MAPRENAL (registered trade mark).

Suitably, the benzoguanamine or derivative thereof may comprise MAPRENAL BF892 and/or MAPRENAL BF 892/68B (commercially available from Ineos). Suitably, benzoguanamine or derivative thereof may comprise MAPRENAL BF 892/68B (commercially available from Ineos).

Suitably, the coating composition may comprise from 15 to 25wt% benzoguanamine or derivative thereof based on the total solid weight of the coating composition.

The coating compositions may further comprise a solvent. The coating compositions may comprise a single solvent or a mixture of solvents. The solvent may comprise water, an organic solvent, a mixture of water and an organic solvent or a mixture of organic solvents.

The organic solvent suitably has sufficient volatility to essentially entirely evaporate from the coating composition during the curing process. As a non-limiting example, the curing process may be by heating at 260 to 425°C for 5 to 20 seconds.

Suitable organic solvents include, but are not limited to the following: aliphatic hydrocarbons such as mineral spirits and high flash point naphtha; aromatic hydrocarbons such as benzene; toluene; xylene; solvent naphtha 100, 150, 200; those available from Exxon-Mobil Chemical Company under the SOLVESSO (RTM) trade name; alcohols such as ethanol; n-propanol; isopropanol; and n-butanol; ketones such as acetone; cyclohexanone; methylisobutyl ketone; methyl ethyl ketone; esters such as ethyl acetate; butyl acetate; n-hexyl acetate; RHODIASOLV (RTM) RPDE (a blend of succinic and adipic esters commercially available from Solvay); glycols such as butyl glycol; glycol ethers such as methoxypropanol; ethylene glycol monomethyl ether; ethylene glycol monobutyl ether and combinations thereof. The solvent, when present, may suitably be used in the coating composition in amounts from 5 to 90 wt%, suitably from 10 to 80wt%, such as from 20 to 75wt%, or even from 30 to 70wt% based on the total weight of the coating composition. Suitably, the solvent, when present, may be used in the coating composition in amounts from 50 to 70wt% based on the total weight of the coating composition.

The polyester materials of the present invention may be dissolved or dispersed in the said solvent during and/or after their formation.

The coating compositions may further comprise a catalyst. Any catalyst typically used to catalyse crosslinking reactions between polyester materials and crosslinking agents may be used. Suitable catalysts will be well known to the person skilled in the art. The catalyst may be a non-metal or a metal catalyst or a combination thereof. Suitable non-metal catalysts include, but are not limited to the following: phosphoric acid; blocked phosphoric acid; CYCAT (RTM) XK 406 N (commercially available from Allnex); sulfuric acid; sulfonic acid; CYCAT 600 (commercially available from Allnex); NACURE (RTM) 5076 or NACURE 5925 (commercially available from King industries); acid phosphate catalyst such as NACURE XC 235 (commercially available from King Industries); and combinations thereof. Suitable metal catalysts will be well known to the person skilled in the art. Suitable metal catalysts include, but are not limited to the

following: tin containing catalysts, such as monobutyl tin tris (2-ethylhexanoate); zirconium containing catalysts, such as KKAT (RTM) 4205 (commercially available from King Industries); titanate based catalysts, such as tetrabutyl titanate TnBT (commercially available from Sigma Aldrich); and combinations thereof. The catalyst, when present, may be used in the coating composition in any suitable amount. The catalyst, when present, may be used in amounts from 0.001 to 10wt%, suitably from 0.001 to 5wt%, such as from 0.01 to 5 wt%, or even from 1 to 3 wt% based on the total solid weight of the coating composition. Suitably, the catalyst, when present, may be used in amounts from 0.01 to 1.5wt% based on the total solid weight of the coating composition.

Suitable examples of catalysts, for example for compositions containing an acrylic polyester resin, may include, but are not limited to the following: metal compounds such as stannous octoate; stannous chloride; butyl stannoic acid (hydroxy butyl tin oxide); monobutyl tin tris (2-ethylhexanoate); chloro butyl tin dihydroxide; tetra-n-propyl titanate; tetra-n-butyl titanate; zinc acetate; acid compounds such as phosphoric acid; para-toluene sulphonic acid; dodecyl benzene sulphonic acid (DDBSA) such as blocked DDBSA, tetra alkyl zirconium materials, antimony trioxide, germanium dioxide and combinations thereof. The catalyst may comprise dodecyl benzene sulphonic acid (DDBSA), such as blocked DDBSA.

The catalyst may be present in the coating composition , in amounts from 0.001 to 1% by dry weight of the aqueous coating composition or powder coating composition, suitably from 0.01 to 0.7%, such as from 0.025 to 0.5% by dry weight of the coating composition.

The coating compositions may comprise a further resin material. Suitable further resin materials will be well known to a person skilled in the art. Suitable examples of further resin materials include, but are not limited to the following: polyester resins; acrylic resins; polyvinyl chloride (PVC) resins; alkyd resins; polyurethane resins; polysiloxane resins; epoxy resins or combinations thereof.

The coating compositions may comprise other optional materials well known in the art of formulating coatings, such as colorants, plasticizers, abrasion-resistant particles, anti-oxidants, hindered amine light stabilizers, UV light absorbers and stabilizers, surfactants, flow control agents, thixotropic agents, fillers, organic co-solvents, reactive diluents, catalysts, grind vehicles, lubricants, waxes and other customary auxiliaries.

As used herein, the term "colorant" means any substance that imparts colour and/or other opacity and/or other visual effect to the composition. The colorant can be added to the coating composition in any suitable form, such as discrete particles, dispersions, solutions and/or flakes. A single colorant or a mixture of two or more colorants can be used in the coatings of the present invention. Suitable colorants are listed in U.S. Patent No. 8,614,286, column 7, line 2 through column 8, line 65. Suitable for packaging coatings are those approved for food contact, such as titanium dioxide; iron oxides, such as black iron oxide; aluminium paste; aluminium powder such as aluminium flake; carbon black; ultramarine blue; phthalocyanines, such as phthalocyanine blue and phthalocyanine green; chromium oxides, such as chromium green oxide; graphite fibrils; ferried yellow; quindo red; and combinations thereof, and those listed in Article 178.3297 of the Code of Federal Regulations. The colorant, when present, may be used in the coating composition in any suitable amount. The colorant, when present, may be used in the coating composition in amounts up to 90wt%, such as up to 50 wt%, or even up to 10wt% based on the total solid weight of the coating composition.

Suitable lubricants will be well known to the person skilled in the art. Suitable examples of lubricants include, but are not limited to the following: carnauba wax and polyethylene type lubricants. The lubricant, when present, may be used in the coating composition in amounts of at least 0.01wt% based on the total solid weight of the coating composition.

Surfactants may optionally be added to the coating composition in order to aid in flow and wetting of the substrate. Suitable surfactants will be well known to the person skilled in the art. Suitably the surfactant, when present, is chosen to be compatible with food and/or beverage container applications. Suitable surfactants include, but are not limited to the following: alkyl sulphates (e.g., sodium lauryl sulphate); ether sulphates; phosphate esters; sulphonates; and their various alkali, ammonium, amine salts; aliphatic alcohol ethoxylates; alkyl phenol ethoxylates (e.g. nonyl phenol polyether); salts and/or combinations thereof. The surfactants, when present, may be present in amounts from 0.01 wt% to 10wt%, suitably from 0.01 to 5wt%, such as from 0.01 to 2wt% based on the total solid weight of the coating composition.

The coating compositions may be substantially free, may be essentially free or may be completely free of bisphenol A (BPA) and derivatives thereof. Derivatives of bisphenol A include, for example, bisphenol A diglycidyl ether (BADGE). The coating compositions may be substantially free or completely free of bisphenol F (BPF) and derivatives thereof. Derivatives of bisphenol F include, for example, bisphenol F diglycidyl ether (BPFG). The compounds or derivatives thereof mentioned above may not be added to the coating composition intentionally but may be present in trace amounts because of unavoidable contamination from the environment. By "substantially free" we mean to refer to polyester material and/or coating compositions containing less than 1000 parts per million (ppm) of any of the compounds or derivatives thereof mentioned above. By "essentially free" we mean to refer to polyester material and/or coating compositions containing less than 100 ppm of any of the compounds or derivatives thereof mentioned above. By "completely free" we mean to refer to polyester material and/or coating compositions containing less than 20 parts per billion (ppb) of any of the compounds or derivatives thereof.

The polyester material and/or coating compositions may be substantially free, may be essentially free or may be completely free of bisphenol A (BPA) and derivatives thereof. Derivatives of bisphenol A include, for example, bisphenol A diglycidyl ether (BADGE). The polyester material and/or coating compositions may be substantially free or completely free of bisphenol F (BPF) and derivatives thereof. Derivatives of bisphenol F include, for example, bisphenol F diglycidyl ether (BPFG). The compounds or derivatives thereof mentioned above may not be added to the coating composition intentionally but may be present in trace amounts because of unavoidable contamination from the environment. By "substantially free" we mean to refer to polyester material and/or coating compositions containing less than 1000 parts per million (ppm) of any of the compounds or derivatives thereof mentioned above. By "essentially free" we mean to refer to polyester material and/or coating compositions containing less than 100 ppm of any of the compounds or derivatives thereof mentioned above. By "completely free" we mean to refer to polyester material and/or coating compositions containing less than 20 parts per billion (ppb) of any of the compounds or derivatives thereof.

The polyester material and/or coating compositions may be substantially free, may be essentially free or may be completely free of dialkyltin compounds, including oxides or other derivatives thereof. Examples of dialkyltin compounds include, but are not limited to the following: dibutyltindilaurate (DBTDL); dioctyltindilaurate; dimethyltin oxide; diethyltin oxide; dipropyltin oxide; dibutyltin oxide (DBTO); dioctyltinoxide (DOTO) or combinations thereof. By "substantially free" we mean to refer to polyester material and/or coating compositions containing less than 1000 parts per million (ppm) of any of the compounds or derivatives thereof mentioned above. By "essentially free" we mean to refer to polyester material and/or coating compositions containing less than 100 ppm of any of the compounds or derivatives thereof mentioned above. By "completely free" we mean to refer to polyester material and/or coating compositions containing less than 20 parts per billion (ppb) of any of the compounds or derivatives thereof.

The polyester material and/or coating compositions may be substantially free of styrene. The coating compositions may be essentially free or may be completely free of styrene. By "substantially free" we mean to refer to polyester material and/or coating compositions containing less than 1000 parts per million (ppm) of any of the compounds or derivatives thereof mentioned above. By "essentially free" we mean to refer to polyester material and/or coating compositions containing less than 100 ppm of any of the compounds or derivatives thereof mentioned above. By "completely free" we mean to refer to polyester material and/or coating compositions containing less than 20 parts per billion (ppb) of any of the compounds or derivatives thereof.

The polyester material and/or coating compositions may be substantially phenol free, or essentially phenol free, or completely phenol free. By "substantially free" we mean to refer to polyester material and/or coating compositions containing less than 1000 parts per million (ppm) of any of the compounds or derivatives thereof mentioned above. By "essentially free" we mean to refer to polyester material and/or coating compositions containing less than 100 ppm of any of the compounds or derivatives thereof mentioned above. By "completely free" we mean to refer to polyester material and/or coating compositions containing less than 20 parts per billion (ppb) of any of the compounds or derivatives thereof.

The polyester material and/or coating compositions may be substantially formaldehyde free, or suitably essentially formaldehyde free, or suitably completely formaldehyde free. By "substantially free" we mean to refer to polyester material and/or coating compositions containing less than 1000 parts per million (ppm) of any of the compounds or derivatives thereof mentioned above. By "essentially free" we mean to refer to polyester material and/or coating compositions containing less than 100 ppm of any of the compounds or derivatives thereof mentioned above. By "completely free" we mean to refer to polyester material and/or coating compositions containing less than 20 parts per billion (ppb) of any of the compounds or derivatives thereof.

The the polyester material, coating composition and/or the cured film derived from the coating composition may exclude 2,2,4,4-tetramethyl-1-3-cyclobutane diol ("TMCD"). The definition of the Tg enhancing monomer may exclude 2,2,4,4-tetramethyl-1-3-cyclobutane diol ("TMCD"). The definition of the polyol component and/or diol component may exclude 2,2,4,4-tetramethyl-1-3-cyclobutane diol ("TMCD").

The coating composition of the present invention may have any suitable solids content. The coating composition may have a solids content of from 10 to 60% by weight of the coating composition, such as from 15 to 50wt% or suitably from 20 to 40 wt%.

The coating composition of the present invention may be cured by any suitable method. The coating composition may be cured by heat curing or by chemical curing, suitably by heat curing. The coating composition, when heat cured, may be cured at any suitable temperature. The coating composition, when heat cured, may be cured to a peak metal temperature (PMT) of 150 to 350°C, suitably from 175 to 320°C, such as from 190 to 300°C, or even from 200 to 280°C. Suitably, the coating composition, when heat cured, may be cured at 210°C or at 260°C. For the avoidance of doubt, the term "peak metal temperature", and like terms as used herein, is meant unless specified otherwise the maximum temperature reached by the metal substrate during exposure to a heat during the heat curing process. In other words, the peak metal temperature (PMT) is the maximum temperature reached by the metal substrate and not the temperature which is applied thereto. It will be appreciated by a person skilled in the art that the temperature reached by the metal substrate may be lower than the temperature which is applied thereto or may be substantially equal to the temperature which is applied thereto. Suitably, the temperature reached by the metal substrate may be lower that the temperature

which is applied thereto.

The coating composition of the present invention may have any suitable solids content. The coating composition may have a solids content of from 10 to 60% by weight of the coating composition, such as from 15 to 50wt% or suitably from 20 to 40 wt%.

The coating composition of the present invention may be cured by any suitable method. The coating composition may be cured by heat curing or by chemical curing, suitably by heat curing. The coating composition, when heat cured, may be cured at any suitable temperature. The coating composition, when heat cured, may be cured at temperatures from 50 to 350°C, suitably from 100 to 320°C, such as from 150 to 300°C, or even from 200 to 300°C. Suitably, the coating composition, when heat cured, may be cured at 230°C or at 250°C. Suitably, the coating composition, when heat cured, may be cured to a peak metal temperature (PMT) of 230°C to 250°C. For the avoidance of doubt, the term "peak metal temperature", and like terms as used herein, is meant unless specified otherwise the maximum temperature reached by the metal substrate during exposure to a heat during the heat curing process. In other words, the peak metal temperature (PMT) is the maximum temperature reached by the metal substrate and not the temperature which is applied thereto. It will be appreciated by a person skilled in the art that the temperature reached by the metal substrate may be lower than the temperature which is applied thereto or may be substantially equal to the temperature which is applied thereto. Suitably, the temperature reached by the metal substrate may be lower that the temperature which is applied thereto.

Curing the coating compositions of the present invention suitably forms a cured film.

The can comprises a can body and a can end. Examples of cans include, but are not limited to one or more of the following, two-piece cans, three-piece cans and the like. The can may be a beverage can.

The can may be formed from any suitable material. Suitably, the can may be formed from metal. Suitable metals will be well known to a person skilled in the art. Suitable examples include, but are not limited to the following: steel; tinplate; tinplate pre-treated with a protective material such as chromium, titanium, titanate or aluminium; tin-free steel (TFS); galvanised steel, such as for example electro-galvanised steel; aluminium; aluminium alloy; and combinations thereof. It will be appreciated by a person skilled in the art that the can body and can end of the beverage can may be formed from the same or different materials, such as the same or different metals. Suitably, the can body and can end of the beverage can may be formed from the same material, such as the same metal.

The can body and/or can end may be made from coiled metal stock. Suitably, at least the can end may be formed from coiled metal stock. Suitably, the coating compositions of the present invention may be applied to coiled metal stock, such as the coiled metal stock from which the ends of cans are made ("can end stock").

The coating composition may be applied to the can end stock prior to the can end being cut and stamped out of the coiled metal stock. The can end may be coated on one or both surfaces. As such, the can coil stock may be coated on one or both surfaces prior to the can end being cut and stamped out of the coiled metal stock.

Advantageously, coating the coiled metal stock on both surfaces thereof may provide sufficient lubricity such that the coating is able to survive the stamping operation.

The can ends having a score line thereon may be "easy open" can ends, sometimes referred to as "easy open ends" or even "EOEs".

Suitably, the score line is applied to the can ends after the can ends have punched from the coated metal stock.

The can ends, once formed, are suitably attached to a can body. The can end may be attached to the can body by any suitable method. Suitably, the can end may be attached to the can body by an edge rolling process.

The coating compositions may be applied to at least the internal surface of the can end over a portion of the score line or may be applied over all of the score line

The coating compositions may be applied to substantially all of or to a portion of the interior surface of the can end, with the proviso that the coating compositions are applied to at least a portion of the interior surface of the can end over at least a portion of the score line. Suitably, the coating compositions may be applied to substantially all of the interior surface of the can end. The coating compositions may be applied to at least a portion of the exterior surface of the can end. The coating compositions may be applied to substantially all of or to a portion of the exterior surface of the can end. Suitably, the coating compositions may be applied to the exterior surface of the can end over at least a portion of the score line. The coating compositions may be applied to at least a portion of the interior and/or exterior surface of the can body.

The coating compositions may be applied to the beverage can by any suitable method. Methods of applying said coating compositions will be well known to a person skilled in the art. Suitable application methods include, but are not limited to one or more of the following, spray coating, roll coating, dipping and/or electrocoating

The coating compositions may be applied to any suitable dry film thickness. The coating compositions may be applied to a dry film thickness from 0.1μm (microns) to 12μm, suitably from 2μm to 8μm, more suitably from 4μm to 7μm, or even from 4μm to 6μm.

The coating compositions may be applied to the beverage can as a single layer or as part of a multi layer system. The coating composition may be applied as a single layer. The coating composition may be applied as the first

coat of a multi coat system. The coating composition may be applied as an undercoat or a primer. The second, third, fourth etc. coats may comprise any suitable paint such as those containing, for example, epoxy resins; polyester resins; polyurethane resins; polysiloxane resins; hydrocarbon resins or combinations thereof. The coating compositions may be applied on top of another paint layer as part of a multi layer system. For example, the coating composition may be applied on top of a primer. The coating compositions may form an intermediate layer or a top coat layer. The coating composition may be applied to a substrate once or multiple times. It will be appreciated by a person skilled in the art that the can body and can end of the beverage can may each independently be coated with a single layer or a multi layer system.

"Powder" and like terms, as used herein, refers to materials that are in the form of solid particulates, as opposed to materials which are in the liquid form.

Powder coating compositions of the present invention may be applied by any suitable method. Methods of applying said powder coating compositions will be well known to a person skilled in the art. Suitable application methods include, such as electrostatic spraying, or applied by ultra corona discharge for example. Suitably, the powder coating compositions according to the present invention may be applied by ultra corona discharge.

When the substrate is electrically conductive, the powder coating composition is typically electrostatically applied. Electrostatic spray application generally involves drawing the coating composition from a fluidized bed and propelling it through a corona field. The particles of the coating composition become charged as they pass through the corona field and are attracted to and deposited upon the electrically conductive substrate, which is grounded. As the charged particles begin to build up, the substrate becomes insulated, thus limiting further particle deposition.

Powder coating compositions according to the present invention may be applied to any suitable dry film thickness. The powder coating compositions according to the present invention may be applied to a dry film thickness from 0.1μm (microns) to 1000μm, suitably from 3μm to 500μm, such as from 5μm to 250μm, or even from 5μm to 150μm, such as from 10μm to 100μm.

The powder component of the present invention may have an average particle size of less than 15 microns (μm). The powder component may have an average particle size of less than 12 μm, suitably, less than 10 μm, such as less than 7.5 μm, or even less than 5 μm. For the avoidance of doubt the term "less than" includes particles having the stated average particle size. For example, "less than 15 μm" refers to particles having an average particle size of 15 μm as well as those having an average particle size below this value.

Particles having these sizes may be produced by any suitable method. Suitable methods will be well known to a person skilled in the art. Examples of suitable methods include, but are not limited to, cold grinding, milling and sieving methods.

The coating compositions of the present invention may comprise a liquid carrier in which the powder component, such as acid functional polyester materials, is dispersed. For the avoidance of doubt, the term dispersion is meant here a powder suspended in a liquid. The coating compositions may comprise any suitable liquid carrier. The liquid carrier may comprise water, an organic solvent, a mixture of water and one or more organic solvent(s) or a mixture of organic solvents. Suitably, the liquid carrier may comprise water.

It will be appreciated that by the term 'an internal surface of the can end' is meant the surface of the can end which will be on the interior of a beverage can once it has been attached thereto, i.e. will form an internal surface of a beverage can once it has been attached thereto.

As used herein, unless otherwise expressly specified, all numbers such as those expressing values, ranges, amounts or percentages may be read as if prefaced by the word "about", even if the term does not expressly appear. Also, any numerical range recited herein is intended to include all sub-ranges subsumed therein. Singular encompasses plural and vice versa. For example, although reference is made herein to "a" coating composition, "a" polyester material, "an" aromatic polyacid, "the" polyester material, and the like, one or more of each of these and any other components can be used. Reference to "one of the polyacid component or the polyol component comprises a functional monomer" refers to either or both of the polyacid component and/or the polyol component comprising a functional monomer. As used herein, the term "polymer" refers to oligomers and both homopolymers and copolymers, and the prefix "poly" refers to two or more. Including, for example and like terms means including for example but not limited to.

All of the features contained herein may be combined with any of the above aspects and in any combination.

## Panel Preparation and Test Methods

The following test panel preparation and test methods were used in these examples:

**Test Panel Preparation:** The coating examples were drawn down with a wire wound bar over zirconium-treated aluminum (0.0082 inch) to give a dry film weight of 6.5-7.5 milligrams/square inch (msi). The panels were then baked in a three zone coil oven (249/326/293°C) to a peak metal temperature of 240°C. The coated panels were stamped and scored into CDL-type can ends.

**Liquor 85 Test Pack (L-85):** An L-85 stock solution was prepared as follows:

| | |
|---|---|
| Deionized Water | 917.3 grams |
| Citric Acid | 92.0 grams |
| 85% Phosphoric Acid | 33.3 grams |
| NaCl (with no iodine) | 71.0 grams |

47 grams of the L-85 stock solution was added to a 12 ounce aluminum beverage can followed by 308 grams of carbonated water (also known as sparkling water). A CDL seamer was then used to seam the can ends onto the body of the can. The cans were then placed upside down into a 38°C incubator for a period of 10 days. After 10 days, the cans were removed from the incubator and the can was punctured at the bottom to empty the liquid. The can was then cut 10 mm below the necked area of the can. The enamel rating of the ends were then measured using the Waco Enamel Rater test described below. An acceptable enamel rating after L-85 pack testing is less than 10 mA and preferably less than 5 mA.

**WACO Enamel Rater Test:** The WACO Enamel Rater test determines the integrity of a fabricated can end by quantifying metal exposure. The ends were secured by vacuum to the electrolyte-filled and electrode-containing end fixture. Fixture and specimen were inverted so that the electrode and the product side of the end came into contact with the electrolyte solution and the edge of the sample contacted a metal chisel, completing the circuit. The instrument then applied a constant voltage (6.3 Volts DC) across the coated surface and measured the resulting current (mA) at the industry standard of 4 seconds duration. The magnitude of the reading is directly proportional to the amount of exposed metal in the test sample. A low reading is desirable since that indicates there is very little exposed metal on the end.

**Eversion Test:** Eversion testing was used to determine the degree of venting. The contents of a 12 ounce (340g) can of soda which had been cooled to 1.5°C overnight was gently transferred into an empty 12 ounce (340g) beverage can. A CDL seamer was then used to seam the can ends onto the body of the can. The cans were placed upside down (i.e. with the can end being tested being at the bottom) in an incubator and incubated at 38°C for 18 hours. After this time, the cans were removed from the incubator and transferred to a fume hood. A can opener or screwdriver was then used to gently leverage the pull tab of the can end. If a metal crack sound was heard (rupture of the score line) with the pressure release 'hiss', there was no eversion and sufficient venting has occurred. This was considered to be a pass. If a metal crack sound was heard (rupture of the score line) but the pressure was not released, there was eversion and sufficient venting had not occurred. This was considered to be a failure. The test was repeated a number of times and the number of failures was recorded. For example, 2 failures out of 16 test repeats would be recorded as 2/16.

**Glass transition temperature (Tg):** The Tg of polyesters and the coatings were measured using differential scanning calorimetry (DSC) using a Perkin Elmer Differential Scanning Calorimeter with a 10°C/min heating rate. The sample was placed in the machine and heated from 30°C to 180°C followed by a cooling ramp from 180°C to -50°C. Then, the sample was re-heated to 180°C. The Tg data was determined from the second heating ramp (i.e. form -50°C to 180°C). The Tg value was determined by the machine software installed by Perkin Elmer.

**Instron Analysis for Young's Modulus:** Instron analysis of the free films (25.4mm x 5mm dimensions) was performed at ambient temperature (24°C) using the mini Instron 44 unit with a 50N load cell and rate of 5 mm/minute. Each sample was measured 3-5 times to obtain representative results.

For a better understanding of the invention, and to show how embodiments of the same may be carried into effect, reference will now be made, by way of example, to the following experimental data.

## EXAMPLES

### Solventborne polyester examples

#### Comparative Polyester Example 1

A polyester having the components of Table 1 was prepared according to the following method.

Components 1-4 were added to a 3L round-bottom flask equipped with a nitrogen blanket, temperature probe, vigreux column, column temperature probe and condenser. The flask was heated to perform a transesterification reaction and distill methanol while maintaining a column temperature of 65°C and having a maximum batch temperature of 230°C. Once the distillation of methanol had finished, the flask was cooled to <150°C. Components 5-9 were added to the flask and the flask was heated to esterify and transesterify the reactants and distill water. The resin was processed up to 230°C and maintained a distillation temperature of 96°C. Once the acid value of the resin was <15.00 mg KOH/g, the flask was cooled to <160°C and component 10 was added. Then, the vigreux column and column temperature probe were replaced with a Dean-Stark filled with SOLVESSO 100 (commercially available from Exxon Mobile) in order to convert the distillation to an azeotropic distillation to remove the water that evolved as a byproduct to the esterification

reaction. The azeotropic distillation was continued until an acid value <2.00 mg KOH/g and a viscosity of W-Z was achieved (diluted to 40% TNV in cyclohexanone). The viscosity was measured in accordance with ASTM D1545-89 ('Standard Test Method for Viscosity of Transparent Liquids by Bubble Time Method'). The resulting polyester material was then dissolved in components 11-14 to produce a resin which was 42 percent by weight solids.

The glass transition temperature (Tg) of the resulting polyester was 31°C.

**Table 1 - Composition of comparative polyester example 1**

| | Component | Amount / g |
|---|---|---|
| 1 | 2-methyl-1,3-propanediol | 215.80 |
| 2 | Butyl titanate (catalyst) | 1.01 |
| 3 | 2,6-naphthalene dicarboxylic acid dimethyl ester | 353.63 |
| 4 | Trimethylol propane | 4.63 |
| 5 | Isophthalic acid | 246.42 |
| 6 | 2-methyl-1,3-propanediol | 152.81 |
| 7 | Adipic acid | 132.88 |
| 8 | Maleic anhydride | 13.31 |
| 9 | Stannous octoate (catalyst) | 0.32 |
| 10 | SOLVESSO 100 * | 50.99 |
| 11 | SOLVESSO 100 * | 592.77 |
| 12 | Dibasic ester 1 ** | 239.36 |
| 13 | Methyl ether propylene glycol acetate | 263.22 |
| 14 | SOLVESSO 150 * | 132.66 |
| * commercially available from Exxon Mobile<br>** commercially available from Nexeo Solutions | | |

**Polyester Example 1**

801.50g of Vylon GK880 (commercially available from Toyobo; a polyester having a number-average molecular weight, Mn, of 18,000 Da and a glass transition temperature, Tg, of 84°C) was added slowly to a stainless steel beaker containing 666.77g cyclohexanone and 666.77g of SOLVESSO 150 (commercially available from Exxon Mobile)with low shear stirring. Once all the Vylon GK880 had been added, the beaker was covered and the agitation was increased to 2,000rpm. The mixture was mixed at this high speed for 2.5 hours to fully dissolve the Vylon GK880.

**Polyester Example 2**

A polyester material having the components of Table 2 was prepared according to the following method.

Components 1-4 were added to a 5L round-bottom flask equipped with a nitrogen blanket, temperature probe, vigreux column, column temperature probe, and condenser. The flask was heated to perform an esterification reaction and distill water while maintaining a column temperature of 93°C and having a maximum batch temperature of 235°C. Once the distillation of water had finished, the flask was cooled to <150°C. Then components 5-7 were added to the flask and the vigreux column and column temperature probe were replaced with a Dean-Stark filled with SOLVESSO 100 solvent. The flask was heated to 200°C. An azeotropic reflux was maintained to remove water formed from the esterification reaction until a final viscosity of Z-Z1 (25°C at 45% TNV in cyclohexanone) and acid value <7.00 mg KOH/g on solids were reached. The viscosity was measured in accordance with ASTM D1545-89 ('Standard Test Method for Viscosity of Transparent Liquids by Bubble Time Method'). The acid value was determined as described above. The resulting polyester was then dissolved in components 8 and 9 to produce a composition which was 42 percent by weight solids.

The glass transition temperature (Tg) of the resulting polyester was 78°C.

**Table 2 - Composition of polyester example 2**

| | Component | Amount / g |
|---|---|---|
| 1 | 1,2-propylene glycol | 703.09 |
| 2 | Glycerol | 21.73 |
| 3 | Terephthalic acid | 1321.12 |
| 4 | Butyl stannoic acid | 1.09 |
| 5 | Maleic anhydride | 135.09 |
| 6 | methylhydroquinone | 0.40 |
| 7 | SOLVESSO 100 * | 120.00 |
| 8 | SOLVESSO 100 * | 1481.60 |
| 9 | Dibasic ester 1 ** | 686.40 |
| * commercially available from Exxon Mobile<br>** commercially available from Nexeo Solutions | | |

**Polyester Example 3**

854.00g of Dynapol L912 pellets (commercially available from Evonik; a polyester having a number-average molecular weight, Mn, of 15,000 Da and a glass transition temperature, Tg, of 105°C) was added slowly to a stainless steel beaker containing 1281.00g SOLVESSO 150 (commercially available from Exxon Mobile) with low shear stirring. Once all the Dynapol L912 pellets had been added, the beaker was covered and the agitation was increased to 2,000rpm. The mixture was mixed at this high speed for 2.5 hours to fully dissolve the Dynapol L912 pellets.

**Polyester Example 4**

An adhesion promoter in the form of a phosphatised polyester having the components of Table 3 was prepared according to the following method.

Components 1-6 were added to a 5L round-bottom flask equipped with a nitrogen blanket, temperature probe, vigreux column, column temperature probe, and condenser. The flask was heated to perform an esterification reaction and distill water while maintaining a column temperature of 96°C and a maximum batch temperature of 200°C. Once the distillation of water had finished and an acid value <13.00 mg KOH/g had been reached, the flask was cooled to <110°C and components 7-9 were added to the flask. Then, the vigreux column and column temperature probe were replaced with a Dean-Stark filled with SOLVESSO 100. An azeotropic distillation was performed until a viscosity of U-W was achieved (diluted to 50% TNV using a 10:1 monobutyl ether of diethylene glycol:2-butoxyethanol solution). The viscosity was measured in accordance with ASTM D1545-89 ('Standard Test Method for Viscosity of Transparent Liquids by Bubble Time Method'). The resulting phosphatized polyester material was then dissolved in components 10 and 11 to produce a resin which was 50 percent by weight solids.

The glass transition temperature (Tg) of the resulting phosphatised polyester was -5°C.

**Table 3 - Composition of polyester example 4**

| | Component | Amount / g |
|---|---|---|
| 1 | 2-methyl-1,3-propanediol | 799.74 |
| 2 | Stannous octoate (catalyst) | 0.96 |
| 3 | Trimethylol propane | 120.99 |
| 4 | Phthalic anhydride | 293.43 |
| 5 | Isophthalic acid | 576.92 |
| 6 | Maleic anhydride | 335.29 |
| 7 | SOLVESSO 100 | 312.94 |

(continued)

| | Component | Amount / g |
|---|---|---|
| 8 | 85% phosphoric acid | 44.71 |
| 9 | Deionised water | 16.32 |
| 10 | 2-butoxyethannol | 155.41 |
| 11 | Diethylene glycol monobutyl ether | 1343.30 |

**Comparative Coating Composition 1**

Comparative Coating composition 1 was prepared according to the formulation in Table 4. All amounts are given in grams (g) unless otherwise specified.

**Coating Composition Examples 1 to 3**

Coating compositions 1 to 3 were prepared according to the formulation in Table 4. All amounts are given in grams (g) unless otherwise specified.

**Table 4 - Formulation of comparative coating composition 1 and coating compositions 1 to 3**

| | Comparative coating composition 1 | Coating composition example 1 | Coating composition example 2 | Coating composition example 3 |
|---|---|---|---|---|
| Comparative polyester example 1 | 510.17- | | - | - |
| Polyester example 1 | | 570.81- | - | - |
| Polyester example 2 | - | - | 58.4 | - |
| Polyester example 3 | - | - | - | 58.7 |
| Polyester example 4 (adhesion promoter) | 21.59 | 21.59 | 2.55 | 2.55 |
| ProHere L 90700 [1] | 12.33 | 12.33 | 1.42 | 1.42 |
| 2-butoxyethyl acetate | 60.28 | 60.28 | 6.95 | 6.95 |
| Maprenal BF 892/68B [2] | 63.48 | 63.48 | 7.32 | 7.32 |
| Lanco TF1780 EF [3] | 0.51 | 0.51 | 0.06 | 0.06 |
| SOLVESSO 100 [4] | 26.16 | 26.16 | 3.02 | 3.02 |
| Dynoadd F-300 [5] | 0.55 | 0.55 | 0.06 | 0.06 |
| SOLVESSO 150 [4] | 136.66 | 54.39 | 20.09 | 19.69 |
| Cyclohexanone | - | 54.39 | - | - |

[1] Carnauba wax dispersion commercially available from Michelman, Inc.
[2] methylol type, highly reactive n-butylated benzoguanamine-formaldehyde resin commercially available from Ineos
[3] PTFE-modified polyethylene wax commercially available from Lubrizol Advanced Materials, Inc.
[4] Commercially available from Exxon Mobil
[5] Additive commercially available from Dynea

**Table 5 - Test Results**

| | Liquor 85 Test Average Enamel Raters after 7day L-85 pack @ 38°C | Eversion | Tg of Coating / °C | Young's Modulus /MPa |
|---|---|---|---|---|
| Comparative Example 1 | 1.87 | 24/24 | 28 | 575 |
| Coating Example 1 | 1.73 | 0/24 | 81 | 2037 |
| Coating Example 2 | 2.25 | 0/30 | 82 | * |
| Coating Example 3 | 3.25 | 0/30 | 103 | * |
| *unable to be obtained | | | | |

The above results show that coatings having a glass transition temperature (Tg) according to the present invention exhibit improved venting compared to comparative coatings.

## Waterborne polyester examples

**Polyester Example 6**

An adhesion promoter in the form of a phosphatized polyester neutralized with amine was formed by mixing the polyester of example 4 with dimethylethanolamine in the amounts shown below.

| | Amount |
|---|---|
| Example 4 | 30.0 |
| Dimethylethanolamine | 0.32 |

**Polyester Example 7**

110.14 g of 85 percent orthophosphoric acid and 89.3 g of butanol was added to the flask. The mixture was heated to 230° F (110° C.) under a nitrogen inert blanket. Once this temperature was reached, the nitrogen blanket was turned off and a premix of 463.3 g of 1,4-cyclohexane dimethanol glycidyl ether (0.286 equivalents of phosphoric acid per equivalent of epoxy) and 151.27 g of butanol was fed over a period of 2 hours and 10 minutes. The batch temperature was maintained below 245° F (118° C) during the addition. After completion of the feed, 13.7 g of butanol was added to the flask and temperature was reduced to 219° F (104° C) and held for an additional 2 hours. 17.3 g of butanol was then added to the flask and the resulting phosphatized polyester had a resin solids of 65.91 percent by weight.

**Polyester Example 8**

An adhesion promoter in the form of a phosphatized polyester neutralized with amine was formed by mixing the phosphatized polyester of example 7 with deionized water and dimethylethanolamine in the amounts shown below.

| | Amount |
|---|---|
| Deionized Water | 75.9 |
| Dimethylethanolamine | 3.93 |
| Example 7 | 20.17 |

## Coating Composition Example 4

A waterborne polyester coating composition based on Toyobo Vylonal KMD-003 (30% solids; contains polyester

resin, DI H20, and 2-butoxyethanol in a ratio of 30/60/10; 7-9 pH; Mn = 10,000; Tg = 53° C; OH Value = 4; Acid Value = 14) was produced by mixing the components shown below.

| | Amount |
|---|---|
| Toyobo Vylonal KMD-003 | 40.33 |
| Dimethylethanolamine | 0.08 |
| Propylene Glycol | 2.28 |
| Cymel 1123 | 3.06 |
| Byk 333 | 0.04 |
| Adhesion promoter of Polyester Example 8 | 0.46 |
| Butyl Cellosolve | 0.57 |
| King Industries Nacure 5925 | 0.05 |

**Coating Composition Example 5**

A waterborne polyester coating based on Toyobo Vylonal KMD-003 was produced by mixing the components shown below.

| | Amount |
|---|---|
| Toyobo Vylonal KMD-003 | 37.5 |
| Dimethylethanolamine | 0.08 |
| Propylene Glycol | 1.72 |
| Cymel 1123 | 3.06 |
| Byk 333 | 0.04 |
| Adhesion Promoter of Polyester Example 6 | 1.86 |
| Butyl Cellosolve | 0.57 |
| King Industries Nacure 5925 | 0.05 |

**Coating Composition Example 6**

A waterborne polyester coating based on Toyobo Vylonal KG-0500 (30.7% solids; contains polyester, DI H2O and 2-butoxyethanol in a ratio of 30.7/59.3/10, 7.4 pH, Tg = 80° C, Acid Value = 16.4) was produced by mixing the components shown below..

| | Amount |
|---|---|
| Toyobo Vylonal KG-0500 | 105.42 |
| Dimethylethanolamine | 0.2 |
| Cymel 1123 | 8.8 |
| Byk 333 | 0.11 |
| Adhesion Promoter of Polyester Example 6 | 5.34 |
| King Industries Nacure 5925 | 0.13 |
| Deionized Water | 28.01 |

**Table 6 - Test Results**

| | Average Enamel Raters after 10d L-85 pack[a] | Eversion Testing | Tg of Coating(° C) | Young's Modulus (MPa) |
|---|---|---|---|---|
| Coating Example 4 | 3.63 | 0/16 | 57 | 775 |
| Coating Example 5 | 3.92 | 0/16 | 52 | |

(continued)

| | Average Enamel Raters after 10d L-85 pack[a] | Eversion Testing | Tg of Coating(°C) | Young's Modulus (MPa) |
|---|---|---|---|---|
| Coating Example 6 | 6.37 | 0/16 | 69 | |

## Waterborne acrylic polyester resin example

### Polyester example 9

Components 1-4 of Table 7 were added to a 3L round-bottom flask equipped with a nitrogen blanket, temperature probe, vigreux column, column temperature probe, and condenser. The flask was heated to perform an esterification reaction and distill water while maintaining a column temperature of 96°C and having a maximum batch temperature of 230°C. Once the distillation of water had finished, the flask was cooled to <150°C. Then components 5 and 6 were added to the flask and heated to 195°C and held until the acid value was <25.00 mg KOH/g on solids. The flask was then cooled to <150°C. Charge 7 was then added to the flask and the vigreux column and column temperature probe were replaced with a Dean-Stark filled with SOLVESSO 100 solvent. The flask was then heated to 200°C. An azeotropic reflux was maintained to remove water formed from the esterification reaction until a final viscosity of Z4-Z5 (25°C at 45% TNV in n-methyl-2-pyrrolidone). The viscosity was measured in accordance with ASTM D1545-89 ('Standard Test Method for Viscosity of Transparent Liquids by Bubble Time Method'). The resulting polyester material was then dissolved in component 8 to produce a composition which was 70 percent by weight solids.

**Table 7 - Composition of polyester example 9**

| | Component | Amount / g |
|---|---|---|
| 1 | Cyclohexane-1,4-Dimethanol | 479.97 |
| 2 | Stannous octoate (catalyst) | 2.77 |
| 3 | Isophthalic Acid | 964.39 |
| 4 | Propylene Glycol | 253.24 |
| 5 | 4-methoxyphenol | 0.21 |
| 6 | Maleic anhydride | 58.54 |
| 7 | Xylene | 101.44 |
| 8 | Dowanol DPM | 557.24 |

### Acrylic polyester resin example 1

Polyester example 9 underwent a grafting process to graft acrylics onto the unsaturated functionality of the backbone of the polyester resin (imparted by the maleic anhydride) to form acrylic polyester resin example 1 using the following method.

Half of the amount of the polyester example 9 given in Table 8 was added to a vessel with mixing at 225 rpms and heated to 110 °C. Once at 110 °C, half of the total amount of each acrylic monomer was added over a period of 80 minutes with continued stirring. 20 minutes after adding the acrylic monomers, 40% of each of the t-butyl peroctoate initiator and Dowanol DPM amounts were added over a 60 min period. The remaining amount of polyester example 9 was then added and the solution heated back to 120°C. At this stage the solution was homogeneous and had good mixing. The remaining acrylic monomers were then added over 80 minutes with continuous stirring. 20 minutes after adding the acrylic monomers, 40% of each of the t-butyl peroctoate initiator and Dowanol DPM amounts were added over a 60 minute period. The remaining t-butyl peroctoate initiator and Dowanol DPM was then added in two evenly split batches, the first batch being added over 5 minutes and the mixture then held at 120°C for 30 minutes before addition of the second batch over 5 minutes and then held at 120°C for 30 minutes. The reaction mixture was then cooled to below 100°C.

**Table 8 - Composition of acrylic polyester resin example 1**

| | Acrylic polyester resin example 1 |
|---|---|
| **Materials** | |
| Polyester Example 9 | 846.88 |
| Methacrylic acid | 29.34 |
| Ethyl methacrylate | 26.88 |
| Methyl methacrylate | 26.88 |
| 2-hydroxyethyl methacrylate | 14.66 |
| t-butyl peroctoate | 11.82 |
| Dowanol DPM | 243.52 |

**Aqueous dispersion example 1**

Acrylic polyester resin 1 was formed into an aqueous dispersion by heating the resin shown in Table 9 to 90°C, and during heating adding DMEA with stirring. The mixture was then held for 10 minutes, after which deionized water was added over 60 minutes, maintaining the temperature 85 °C. The aqueous dispersion was then allowed to cool to 45 °C.

**Table 9 - Composition of aqueous dispersion example 1**

| | Aqueous dispersion example 1 |
|---|---|
| **Materials** | |
| Dimethylethanolamine | 10.39 |
| Deionized Water | 872.47 |
| | |
| **Properties** | |
| Final % solids | 33.56 |
| % polyester | 84.52 |
| % acrylic | 13.81 |
| % initiator | 1.67 |
| AV | 11.4 |

**Coating composition example 7**

Aqueous dispersion example 1 was formed into a coating composition by mixing the components shown in Table 10.

**Table 10 - Composition of coating composition example 7**

| | Component | Amount / g |
|---|---|---|
| 1 | Aqueous dispersion example 1 | 121.98 |
| 2 | Cymel 1123 | 7.34 |
| 3 | Nacure 5925 | 0.19 |
| 4 | Michem Lube 388F | 1.52 |
| 5 | Byk-333 | 0.12 |

**Table 11 - Results**

| | Liquor 85 Test Average Enamel Raters after 7day L-85 pack @ 38°C | Coating Tg / °C |
|---|---|---|
| Coating Composition Example 7 | 5.8 | 72 |

As shown by the results above, coating compositions according to the present invention provide excellent venting. Furthermore, coating compositions according to the present invention provide excellent venting in combination with good to excellent coating integrity.

Attention is directed to all papers and documents which are filed concurrently with or previous to this specification in connection with this application and which are open to public inspection with this specification.

All of the features disclosed in this specification (including any accompanying claims, abstract and drawings), and/or all of the steps of any method or process so disclosed, may be combined in any combination, except combinations where at least some of such features and/or steps are mutually exclusive.

## Claims

1. Use of a coating composition in the reduction or prevention of insufficient venting of a beverage can, the beverage can comprising a can body and a can end having a score line on said can end, wherein the coating composition comprises a polyester material, wherein the coating composition is applied to at least the internal surface of the can end over at least a portion of the score line, and wherein a cured film formed from the coating composition has a glass transition temperature (Tg), as determined herein, of at least 50°C.

2. A method of coating a can comprising a can body and a can end having a score line on said can end, wherein the method comprises applying a coating composition to at least a portion of an internal surface of the can end over at least a portion of the score line, the coating composition comprising a polyester material;

   And curing the coating composition to form a cured film, wherein the cured film has a glass transition temperature (Tg), as determined herein, of at least 50°C,
   wherein the can, when filled with a carbonated beverage and sealed, exhibits sufficient venting upon rupture of the score line, as determined by the eversion test as defined herein.

3. A use or method according to either of claim 1 or claim 2, wherein the polyester material is obtainable by polymerizing a polyacid component and a polyol component, wherein the polyacid component comprises terephthalic acid (TPA), isophthalic acid (IPA), dimethyl terephthalate, dimethyl isophthalic acid, 1,4 cyclohexane dicarboxylic acid, hexahydrophthalic anhydride, 2,6-naphthalene dicarboxylic acid, adipic acid, phthalic anhydride, maleic anhydride, and/or fumaric anhydride.

4. A use or method according to any preceding claim, wherein the polyester material is obtainable by polymerizing a polyacid component and a polyol component, wherein the polyol component comprises: propylene glycol, 2-methyl propanediol (2-MPD), neopentyl glycol (NPG), 1,4-cyclohexane dimethanol (CHDM), butyl ethyl propane diol (BEPD), trimethylolppropane (TMP) and/or 1,6 hexanediol.

5. A use or method according to either of claim 3 or claim 4, wherein the polyacid component and/or the polyol component of the polyester material comprises a Tg enhancing monomer comprising:

   (i) an optionally substituted naphthalene group-containing polyacid or polyol, or hydrogenated derivative thereof;
   (ii) a polyacid or polyol comprising two optionally substituted 5 or 6 membered cyclic groups, wherein the cyclic groups do not share an atom, and wherein the cyclic groups are directly bonded or are separated by one carbon atom;
   (iii) an optionally substituted furan group-containing polyacid or polyol;
   (iv) an optionally substituted fused bicyclic group-containing polyacid or polyol, wherein each ring is a five membered ring and in which one or both rings may comprise a heteroatom in the ring;
   (v) an optionally substituted bridged tricyclodecane group-containing polyacid or polyol;
   (vi) an optionally substituted bridged norbornene-group containing polyacid or polyol, or hydrogenated derivative

thereof;
(vii) an optionally substituted 5 or 6 membered cycloalkyl or aromatic group-containing polyacid or polyol;
(viii) a branched alkyl group-containing polyacid or polyol monomer wherein the monomer comprises at least one quaternary carbon atom and is formed of from 5 to 10 carbon atoms, and wherein the carbon atoms bonded to the acid or hydroxyl groups are primary carbon atoms;
(ix) an optionally substituted tetraoxaspiro[5.5]undecane-group containing polyacid or polyol; and/or
(x) a diol according to formula (I)

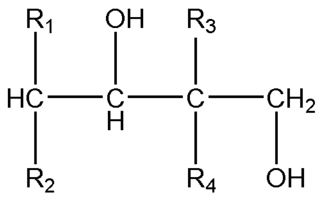
(I)

wherein $R_1$ and $R_2$ each independently represent a hydrogen radical, a lower alkyl radical or an aryl radical having 6 to 12 carbon atoms, wherein at least one of $R_1$ or $R_2$ is a lower alkyl radical or an aryl radical having 6 to 12 carbon atoms; and $R_3$ and $R_4$ each independently represent a lower alkyl radical or an aryl radical having 6 to 12 carbon atoms.

**6.** A use or method according to any preceding claim, wherein the cured film formed from the coating composition has a glass transition temperature (Tg), as determined herein, from 65 to 110°C.

**7.** A use or method according to any preceding claim, wherein the polyester material has an Mn from 5,000 to 25,000 Da determined by gel permeation chromatography using a polystyrene standard according to ASTM D6579-11.

**8.** A use or method according to any preceding claim, wherein the polyester material has a gross hydroxyl value from 0 to 150 mg KOH/g.

**9.** A use or method according to any preceding claim, wherein the polyester material has an acid number from 0 to 150 mg KOH/g.

**10.** A use or method according to any preceding claim, wherein the polyester material comprises an acrylic polyester resin.

**11.** A use or method according to claim 10, wherein the acrylic polyester resin is obtainable by grafting an acrylic polymer and a polyester material, wherein the polyester material is obtainable by polymerizing:

i) a polyacid component, with
ii) a polyol component,

wherein one of the polyacid component or the polyol component comprises a functional monomer operable to impart functionality on to the polyester material, such that an acrylic polymer may be grafted with the polyester material via the use of said functionality.

**12.** A use or method according to claim 11, wherein the functional monomer comprises an ethylenically unsaturated monomer, which ethylenically unsaturated monomer is operable to impart ethylenically unsaturated functionality on the backbone of the polyester material, or pendant therefrom.

**13.** A use or method according to claim 12, wherein the functional monomer of the polyester material of the acrylic polyester resin comprises maleic acid, maleic anhydride and/or fumaric acid.

**14.** A use or method according to any preceding claim, wherein the coating composition has a Young's modulus, as determined herein, of 0.5 to 3 gigapascal (GPa).

**15.** A use or method according to any preceding claim, wherein the coating composition is a liquid coating composition or a powder coating composition.

**16.** A use or method according to any preceding claim, wherein the coating composition further comprises a second polyester material in addition to the polyester material.

**17.** A use or method according to any preceding claim, wherein the coating composition comprises an adhesion promoter.

**18.** A use or method according to claim 17, wherein the adhesion promoter comprises an acidic polyester.

**19.** A use or method according to claim 18, wherein the acidic polyester comprises the reaction product of a reaction mixture comprising;

(a) a precursor polyester resin, the precursor polyester resin being a polycondensate of:

(I) a polyol component comprising a mixture of diols and triols; and
(II)a polyacid component comprising alpha,beta-unsaturated polycarboxylic acid; and

(b) a phosphorous acid.

**20.** A use or method according to any preceding claim, wherein the polyester material and/or coating composition contains less than 1000 parts per million (ppm) of bisphenol A (BPA) and derivatives thereof.

**Patentansprüche**

**1.** Verwendung einer Beschichtungszusammensetzung zum Verringern oder Verhindern von ungenügendem Druckausgleich einer Getränkedose, wobei die Getränkedose einen Dosenkörper und ein Dosenende mit einer Kerblinie an dem Dosenende umfasst, wobei die Beschichtungszusammensetzung ein Polyestermaterial umfasst, wobei die Beschichtungszusammensetzung auf wenigstens die Innenoberfläche des Dosenendes über wenigstens einen Teil der Kerblinie aufgebracht wird und wobei ein aus der Beschichtungszusammensetzung gebildeter gehärteter Film eine Glasübergangstemperatur (Tg), wie hierin bestimmt, von wenigstens 50 °C aufweist.

**2.** Verfahren zum Beschichten einer Dose, die einen Dosenkörper und ein Dosenende mit einer Kerblinie an dem Dosenende umfasst, wobei das Verfahren Aufbringen einer Beschichtungszusammensetzung auf wenigstens einen Teil einer Innenoberfläche des Dosenendes über wenigstens einen Teil der Kerblinie umfasst, wobei die Beschichtungszusammensetzung ein Polyestermaterial umfasst;

und Härten der Beschichtungszusammensetzung, um einen gehärteten Film zu bilden, wobei der gehärtete Film eine Glasübergangstemperatur (Tg), wie hierin bestimmt, von wenigstens 50 °C aufweist,
wobei die Dose, wenn mit einem kohlensäurehaltigen Getränk gefüllt und verschlossen, bei Brechen der Kerblinie ausreichenden Druckausgleich, wie durch die wie hierin definierte Eversionsprüfung bestimmt, zeigt.

**3.** Verwendung oder Verfahren gemäß einem von Anspruch 1 und Anspruch 2, wobei das Polyestermaterial erhältlich ist durch Polymerisation einer Polysäurekomponente und einer Polyolkomponente, wobei die Polysäurekomponente Terephthalsäure (TPA), Isophthalsäure (IPA), Dimethylterephthalat, Dimethylisophthalsäure, 1,4-Cyclohexandicarbonsäure, Hexahydrophthalsäureanhydrid, 2,6-Naphthalindicarbonsäure, Adipinsäure, Phthalsäureanhydrid, Maleinsäureanhydrid und/oder Fumarsäureanhydrid umfasst.

**4.** Verwendung oder Verfahren gemäß einem der vorstehenden Ansprüche, wobei das Polyestermaterial erhältlich ist durch Polymerisation einer Polysäurekomponente und einer Polyolkomponente, wobei die Polyolkomponente umfasst: Propylenglycol, 2-Methylpropandiol (2-MPD), Neopentylglycol (NPG), 1,4-Cyclohexandimethanol (CHDM), Butylethylpropandiol (BEPD), Trimethylolpropan (TMP) und/oder 1,6-Hexandiol.

**5.** Verwendung oder Verfahren gemäß einem von Anspruch 3 und Anspruch 4, wobei die Polysäurekomponente und/oder die Polyolkomponente des Polyestermaterials ein Tgerhöhendes Monomer umfasst, umfassend:

(i) eine Polysäure oder ein Polyol, die/das eine gegebenenfalls substituierte Naphthalingruppe enthält, oder ein hydriertes Derivat davon;
(ii) eine Polysäure oder ein Polyol umfassend zwei gegebenenfalls substituierte, 5- oder 6-gliedrige cyclische Gruppen, wobei die cyclischen Gruppen kein Atom teilen und wobei die cyclischen Gruppen direkt gebunden

sind oder durch ein Kohlenstoffatom getrennt sind;

(iii) eine Polysäure oder ein Polyol, die/das eine gegebenenfalls substituierte Furangruppe enthält;

(iv) eine Polysäure oder ein Polyol, die/das eine gegebenenfalls substituierte, verschmolzene bicyclische Gruppe enthält, wobei jeder Ring ein fünfgliedriger Ring ist und wobei einer oder beide Ringe ein Heteroatom in dem Ring umfassen können;

(v) eine Polysäure oder ein Polyol, die/das eine gegebenenfalls substituierte verbrückte Tricyclododecangruppe enthält;

(vi) eine Polysäure oder ein Polyol, die/das eine gegebenenfalls substituierte verbrückte Norbornengruppe enthält, oder ein hydriertes Derivat davon;

(vii) eine Polysäure oder ein Polyol, die/das eine gegebenenfalls substituierte, 5- oder 6-gliedrige Cycloalkyl- oder aromatische Gruppe enthält;

(viii) ein Polysäure- oder Polyolmonomer, das eine verzweigte Alkylgruppe enthält, wobei das Monomer wenigstens ein quaternäres Kohlenstoffatom umfasst und aus 5 bis 10 Kohlenstoffatomen gebildet ist, und wobei die an die Säure- oder Hydroxygruppen gebundenen Kohlenstoffatome primäre Kohlenstoffatome sind;

(ix) eine Polysäure oder ein Polyol, die/das eine gegebenenfalls substituierte Tetraoxaspiro[5.5]undecangruppe enthält; und/oder

(x) ein Diol gemäß Formel (I)

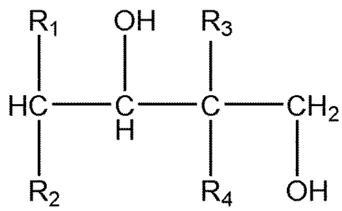

(I)

wobei $R_1$ und $R_2$ jeweils unabhängig einen Wasserstoffrest, einen Niederalkylrest oder einen Arylrest mit 6 bis 12 Kohlenstoffatomen darstellen, wobei wenigstens eines von $R_1$ und $R_2$ ein Niederalkylrest oder ein Arylrest mit 6 bis 12 Kohlenstoffatomen ist; und $R_3$ und $R_4$ jeweils unabhängig einen Niederalkylrest oder einen Arylrest mit 6 bis 12 Kohlenstoffatomen darstellen.

**6.** Verwendung oder Verfahren gemäß einem der vorstehenden Ansprüche, wobei der aus der Beschichtungszusammensetzung gebildete gehärtete Film eine Glasübergangstemperatur (Tg), wie hierin bestimmt, von 65 bis 110 °C aufweist.

**7.** Verwendung oder Verfahren gemäß einem der vorstehenden Ansprüche, wobei das Polyestermaterial ein Mn von 5.000 bis 25.000 Da, bestimmt durch Gelpermeationschromatographie unter Verwendung eines Polystyrolstandards gemäß ASTM D6579-11, aufweist.

**8.** Verwendung oder Verfahren gemäß einem der vorstehenden Ansprüche, wobei das Polyestermaterial einen Brutto-Hydroxywert von 0 bis 150 mg KOH/g aufweist.

**9.** Verwendung oder Verfahren gemäß einem der vorstehenden Ansprüche, wobei das Polyestermaterial eine Säurezahl von 0 bis 150 mg KOH/g aufweist.

**10.** Verwendung oder Verfahren gemäß einem der vorstehenden Ansprüche, wobei das Polyestermaterial ein Acrylpolyesterharz umfasst.

**11.** Verwendung oder Verfahren gemäß Anspruch 10, wobei das Acrylpolyesterharz erhältlich ist durch Pfropfen eines Acrylpolymers und eines Polyestermaterials, wobei das Polyestermaterial erhältlich ist durch Polymerisation von:

i) einer Polysäurekomponente mit
ii) einer Polyolkomponente,

wobei eine von der Polysäurekomponente und der Polyolkomponente ein funktionelles Monomer umfasst, das funktionsfähig ist, dem Polyestermaterial Funktionalität zu verleihen, so dass ein Acrylpolymer unter Verwendung der Funktionalität mit dem Polyestermaterial gepfropft werden kann.

12. Verwendung oder Verfahren gemäß Anspruch 11, wobei das funktionelle Monomer ein ethylenisch ungesättigtes Monomer umfasst, wobei das ethylenisch ungesättigte Monomer funktionsfähig ist, dem Gerüst des Polyestermaterials oder daran anhängend ethylenisch ungesättigte Funktionalität zu verleihen.

13. Verwendung oder Verfahren gemäß Anspruch 12, wobei das funktionelle Monomer des Polyestermaterials des Acrylpolyesterharzes Maleinsäure, Maleinsäureanhydrid und/oder Fumarsäure umfasst.

14. Verwendung oder Verfahren gemäß einem der vorstehenden Ansprüche, wobei die Beschichtungszusammensetzung einen Young-Modul, wie hierin bestimmt, von 0,5 bis 3 Gigapascal (GPa) aufweist.

15. Verwendung oder Verfahren gemäß einem der vorstehenden Ansprüche, wobei die Beschichtungszusammensetzung eine flüssige Beschichtungszusammensetzung oder eine pulverförmige Beschichtungszusammensetzung ist.

16. Verwendung oder Verfahren gemäß einem der vorstehenden Ansprüche, wobei die Beschichtungszusammensetzung ferner ein zweites Polyestermaterial zusätzlich zu dem Polyestermaterial umfasst.

17. Verwendung oder Verfahren gemäß einem der vorstehenden Ansprüche, wobei die Beschichtungszusammensetzung einen Haftförderer umfasst.

18. Verwendung oder Verfahren gemäß Anspruch 17, wobei der Haftförderer einen sauren Polyester umfasst.

19. Verwendung oder Verfahren gemäß Anspruch 18, wobei der saure Polyester das Reaktionsprodukt eines Reaktionsgemischs umfasst, das umfasst:

    (a) ein Vorläufer-Polyesterharz, wobei das Vorläufer-Polyesterharz ein Polykondensat ist von:

        (I) einer Polyolkomponente, die ein Gemisch von Diolen und Triolen umfasst; und
        (II) einer Polysäurekomponente, die alpha,beta-ungesättigte Polycarbonsäure umfasst; und

    (b) eine Phosphorsäure.

20. Verwendung oder Verfahren gemäß einem der vorstehenden Ansprüche, wobei das Polyestermaterial und/oder die Beschichtungszusammensetzung weniger als 1000 Parts per Million (ppm) an Bisphenol A (BPA) und Derivaten davon enthält.

## Revendications

1. Utilisation d'une composition de revêtement dans la réduction ou la prévention d'un dégazage insuffisant d'une canette de boisson,
la canette de boisson comprenant un corps de canette et une extrémité de canette ayant une ligne de découpe sur ladite extrémité de canette, dans laquelle la composition de revêtement comprend un matériau de polyester, dans laquelle la composition de revêtement est appliquée sur au moins la surface interne de l'extrémité de la canette par-dessus au moins une partie de la ligne de découpe, et dans laquelle un film durci formé à partir de la composition de revêtement a une température de transition vitreuse (Tg), telle que déterminée dans la présente invention, d'au moins 50 °C.

2. Procédé de revêtement d'une canette comprenant un corps de canette et une extrémité de canette ayant une ligne de découpe sur ladite extrémité de canette, dans lequel le procédé comprend l'application d'une composition de revêtement sur au moins une partie d'une surface interne de l'extrémité de la canette par-dessus au moins une partie de la ligne de découpe, la composition de revêtement comprenant un matériau de polyester ;

    et le durcissement de la composition de revêtement pour former un film durci, dans lequel le film durci a une température de transition vitreuse (Tg), telle que déterminée dans la présente invention, d'au moins 50 °C,
    dans lequel la canette, lorsqu'elle est remplie d'une boisson gazeuse et scellée, présente un dégazage suffisant à la rupture de la ligne de découpe, tel que déterminé par le test de renversement tel que défini dans la présente invention.

**3.** Utilisation ou procédé selon l'une ou l'autre de la revendication 1 ou de la revendication 2, dans lesquels le matériau de polyester peut être obtenu par polymérisation d'un constituant polyacide et d'un constituant polyol, dans lesquels le constituant polyacide comprend l'acide téréphtalique (TPA), l'acide isophtalique (IPA), le téréphtalate de diméthyle, l'acide diméthylisophtalique, l'acide 1,4-cyclohexanedicarboxylique, l'anhydride hexahydrophtalique, l'acide 2,6-naphtalènedicarboxylique, l'acide adipique, l'anhydride phtalique, l'anhydride maléique, et/ou l'anhydride fumarique.

**4.** Utilisation ou procédé selon l'une quelconque des revendications précédentes, dans lesquels le matériau de polyester peut être obtenu par polymérisation d'un constituant polyacide et d'un constituant polyol, dans lequel le constituant polyol comprend : le propylène glycol, le 2-méthylpropanediol (2-MPD), le néopentylglycol (NPG), le 1,4-cyclohexanediméthanol (CHDM), le butyléthylpropanediol (BEPD), le triméthylolpropane (TMP) et/ou le 1,6 hexanediol.

**5.** Utilisation ou procédé selon l'une ou l'autre de la revendication 3 ou de la revendication 4, dans lesquels le constituant polyacide et/ou le composant polyol du matériau de polyester comprend un monomère améliorant la Tg comprenant :

(i) un polyacide ou un polyol comportant un groupement naphtalène éventuellement substitué, ou un dérivé hydrogéné de ceux-ci ;
(ii) un polyacide ou un polyol comprenant deux groupements cycliques à 5 ou 6 chaînons éventuellement substitués, dans lesquels les groupements cycliques ne partagent pas d'atome, et dans lesquels les groupements cycliques sont directement liés ou sont séparés par un atome de carbone ;
(iii) un polyacide ou un polyol comportant un groupement furane éventuellement substitué ;
(iv) un polyacide ou un polyol comportant un groupement bicyclique fusionné éventuellement substitué, dans lesquels chaque cycle est un cycle à cinq chaînons et dans lequel un cycle ou les deux peuvent comprendre un hétéroatome dans le cycle ;
(v) un polyacide ou un polyol comportant un groupement tricyclodécane ponté éventuellement substitué ;
(vi) un polyacide ou un polyol comportant un groupement norbornène ponté éventuellement substitué, ou un dérivé hydrogéné de ceux-ci ;
(vii) un polyacide ou un polyol comportant un groupement cycloalkyle ou aromatique à 5 ou 6 chaînons éventuellement substitué ;
(viii) un monomère de polyacide ou de polyol comportant un groupement alkyle ramifié dans lesquels le monomère comprend au moins un atome de carbone quaternaire et est formé d'entre 5 et 10 atomes de carbone, et dans lesquels les atomes de carbone liés aux groupements acide ou hydroxyle sont des atomes de carbone primaires ;
(ix) un polyacide ou un polyol comportant un groupement tétraoxaspiro[5.5]undécane éventuellement substitué ; et/ou
(x) un diol selon la formule (I)

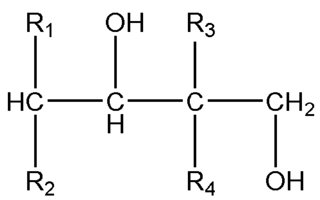
(I)

dans lesquels $R_1$ et $R_2$ représentent chacun indépendamment un radical hydrogène, un radical alkyle court ou un radical aryle ayant 6 à 12 atomes de carbone, dans lesquels au moins un parmi $R_1$ ou $R_2$ représente un radical alkyle court ou un radical aryle ayant 6 à 12 atomes de carbone ; et $R_3$ et $R_4$ représentent chacun indépendamment un radical alkyle court ou un radical aryle ayant 6 à 12 atomes de carbone.

**6.** Utilisation ou procédé selon l'une quelconque des revendications précédentes, dans lesquels le film durci formé à partir de la composition de revêtement a une température de transition vitreuse (Tg), telle que déterminée dans la présente invention, comprise entre 65 et 110 °C.

**7.** Utilisation ou procédé selon l'une quelconque des revendications précédentes, dans lesquels le matériau de polyester a une Mn comprise entre 5000 et 25 000 Da déterminée par chromatographie à perméation de gel en utilisant un étalon polystyrène selon ASTM D6579-11.

8. Utilisation ou procédé selon l'une quelconque des revendications précédentes, dans lesquels le matériau de polyester a un indice d'hydroxyle brut compris entre 0 et 150 mg de KOH/g.

9. Utilisation ou procédé selon l'une quelconque des revendications précédentes, dans lesquels le matériau de polyester a un indice d'acidité compris entre 0 et 150 mg de KOH/g.

10. Utilisation ou procédé selon l'une quelconque des revendications précédentes, dans lesquels le matériau de polyester comprend une résine polyester acrylique.

11. Utilisation ou procédé selon la revendication 10, dans lesquels la résine polyester acrylique peut être obtenue par greffage d'un polymère acrylique et d'un matériau de polyester, dans lesquels le matériau de polyester peut être obtenu par polymérisation :

    i) d'un constituant polyacide, avec
    ii) un constituant polyol,

    dans lesquels l'un parmi le constituant polyacide ou le constituant polyol comprend un monomère fonctionnel pouvant être employé pour conférer une fonctionnalité au matériau de polyester, de sorte qu'un polymère acrylique puisse être greffé avec le matériau de polyester via l'utilisation de ladite fonctionnalité.

12. Utilisation ou procédé selon la revendication 11, dans lesquels le monomère fonctionnel comprend un monomère à insaturation éthylénique, lequel monomère à insaturation éthylénique peut être employé pour conférer une fonctionnalité à insaturation éthylénique sur le squelette du matériau de polyester, ou pendante depuis celui-ci.

13. Utilisation ou procédé selon la revendication 12, dans lesquels le monomère fonctionnel du matériau de polyester de la résine polyester acrylique comprend l'acide maléique, l'anhydride maléique et/ou l'acide fumarique.

14. Utilisation ou procédé selon l'une quelconque des revendications précédentes, dans lesquels la composition de revêtement a un module d'Young, tel que déterminé dans la présente invention, de 0,5 à 3 gigapascals (GPa).

15. Utilisation ou procédé selon l'une quelconque des revendications précédentes, dans lesquels la composition de revêtement est une composition de revêtement liquide ou une composition de revêtement en poudre.

16. Utilisation ou procédé selon l'une quelconque des revendications précédentes, dans lesquels la composition de revêtement comprend en outre un second matériau de polyester en plus du matériau de polyester.

17. Utilisation ou procédé selon l'une quelconque des revendications précédentes, dans lesquels la composition de revêtement comprend un promoteur d'adhérence.

18. Utilisation ou procédé selon la revendication 17, dans lesquels le promoteur d'adhérence comprend un polyester acide.

19. Utilisation ou procédé selon la revendication 18, dans lesquels le polyester acide comprend le produit de réaction d'un mélange réactionnel comprenant :

    (a) une résine polyester précurseur, la résine polyester précurseur étant un polycondensat de :

        (I) un constituant polyol comprenant un mélange de diols et de triols ; et
        (II) un constituant polyacide comprenant un acide polycarboxylique alpha,bêta-insaturé ; et

    (b) un acide phosphoreux.

20. Utilisation ou procédé selon l'une quelconque des revendications précédentes, dans lesquels le matériau de polyester et/ou la composition de revêtement comportent moins de 1000 parties par million (ppm) de bisphénol A (BPA) et de dérivés de celui-ci.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 03312311 A
- WO 2018111854 A
- EP 3074448 A
- EP 3074447 A
- WO 2017123955 A
- US 8614286 B


### Non-patent literature cited in the description


- **RYNTZ R. A. ; YANEFF P. V.** Coatings of Polymers and Plastics. CRC Press, 04 February 2003, 134
- The Chemistry and Application of Phenolic Resins or Phenoplasts. John Wiley and Sons/Cita Technology Limited, 1997, vol. V
- The Chemistry and Applications of Amino Crosslinking agents or Aminoplast. John Wiley & Sons/Cita Technology Limited, 1998, vol. V, 21
- The Chemistry and Applications of Amino Crosslinking agents or Aminoplast. John Wiley & Sons/Cita Technology Limited, 1998, vol. V, 21 ff